# EUROPEAN PATENT APPLICATION

(11) **EP 4 525 088 A1**
(43) Date of publication of application: **19.03.2025**
(21) Application number: 22966250.7
(22) Date of filing: 25.11.2022
(51) Int. Cl.: H01M 4/583, H01M 4/1393, H01M 10/0525

(54) **SECONDARY BATTERY AND ELECTRICAL DEVICE**

(71) Applicant: Contemporary Amperex Technology (Hong Kong) Limited, Central, Central And Western District (HK)
(72) Inventor: CHEN, Yonghong, Ningde City, Fujian 352100 (CN); SHEN, Rui, Ningde City, Fujian 352100 (CN); HE, Libing, Ningde City, Fujian 352100 (CN)
(74) Representative: Jacob, Reuben Ellis
(86) International application number: PCT/CN2022/134400
(87) International publication number: WO 2024/108562

(57) **Abstract**

The present application provides a secondary battery and an electrical device. The secondary battery comprises a negative electrode sheet; the negative electrode sheet comprises a negative electrode current collector and a negative electrode film layer formed on at least one surface of the negative electrode current collector; the negative electrode film layer has a first surface away from the negative electrode current collector and a second surface opposite to the first surface; the thickness of the negative electrode film layer is denoted as H; a region within a thickness range from the second surface of the negative electrode film layer to 0.3H is denoted as a first region of the negative electrode film layer, and a region within a thickness range from the first surface of the negative electrode film layer to 0.3H is denoted as a second region of the negative electrode film layer; the first region comprises a first active material; the first active material comprises a first carbon-based material and a second carbon-based material; the first carbon-based material has a pore structure; and the second carbon-based material comprises artificial graphite. According to the present application, the secondary battery can have both high safety performance and good dynamic performance and cycling performance while having high energy density.

## Description

### TECHNICAL FIELD

The present application belongs to the technical field of batteries, in particular to a secondary battery and an electrical device.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, people have put forward serious challenges to the performance of secondary batteries, such as the requirement that secondary batteries need to have various performance such as energy density, dynamic performance, and service life. However, the problem faced in the prior art is: when improving the dynamic performance of the secondary battery, it is often difficult to take into account the energy density of the secondary battery; when improving the energy density of the secondary battery, it often affects the dynamic performance and the service life of the secondary battery.

### SUMMARY

The present application was developed in view of the above technical problem, and its purpose is to provide a secondary battery and an electrical device, which can enable the secondary battery to have high energy density as well as a high safety performance while having good dynamic performance and cycling performance.

A first aspect of the present application provides a secondary battery comprising a negative electrode plate, wherein the negative electrode plate comprises a negative electrode current collector and a negative electrode film formed on at least one surface of the negative electrode current collector, wherein the negative electrode film has a first surface away from the negative electrode current collector and a second surface disposed opposite to the first surface, a thickness of the negative electrode film being denoted as H, a region within a thickness ranging from the second surface of the negative electrode film to 0.3 H being denoted as a first region of the negative electrode film, a region within a thickness ranging from the first surface of the negative electrode film to 0.3 H being denoted as a second region of the negative electrode film, wherein the first region comprises a first active material comprising a first carbon-based material and a second carbon-based material, and wherein the first carbon-based material has a pore structure, the second carbon-based material comprises artificial graphite.

The inventors found in the research that by making the first region of the negative electrode film comprise both the first carbon-based material having a pore structure and the second carbon-based material comprising artificial graphite, the negative electrode plate can be made to have high compaction density, low volume change, and high active ion transport speed, and thus the secondary battery using the negative electrode plate can have high energy density, high safety performance, good dynamic performance and cycling performance.

In some embodiments of the present application, the second carbon-based material comprises artificial graphite of secondary particles; optionally, the quantity proportion of the artificial graphite of secondary particles in the second carbon-based material is greater than or equal to 50%. When the second carbon-based material comprises an appropriate proportion of the artificial graphite of secondary particles, the active ion channels in the negative electrode film can be increased and the active ion intercalating path can be shortened, so that the dynamic performance of the secondary battery can be further improved, and the polarization of the battery can be reduced and the occurrence of the side reaction can be reduced, so that the secondary battery can have good cycling performance and good dynamic performance.

In some embodiments of the present application, (002) crystal planes of the second carbon-based material have an interplanar spacing greater than that of (002) crystal planes of the first carbon-based material. By adjusting the interplanar spacing of the (002) crystal planes of the second carbon-based material in the first region of the negative electrode film to be greater than that of the (002) crystal planes of the first carbon-based material, it is favorable for the secondary battery to have high energy density as well as good dynamic performance.

In some embodiments of the present application, the second carbon-based material has a graphitization degree smaller than that of the first carbon-based material. By adjusting the graphitization degree of the second carbon-based material in the first region of the negative electrode film to be smaller than that of the first carbon-based material, it is beneficial for the secondary battery to have high energy density as well as good dynamic performance.

In some embodiments of the present application, the second carbon-based material has a specific capacity less than that of the first carbon-based material. By combining the first carbon-based material having a high capacity with the second carbon-based material comprising artificial graphite for use in the first region of the negative electrode film, it is favorable for the secondary battery to have high energy density as well as good dynamic performance.

In some embodiments of the present application, (002) crystal planes of the second carbon-based material have an interplanar spacing less than or equal to 0.33600 nm, optionally from 0.33571 nm to 0.33600 nm. When the interplanar spacing of the second carbon-based material is within the above range, it has a relatively high surface stability, which is capable of reducing the occurrence of side reactions, and at the same time facilitates the rapid de-intercalation of the active ions, which is conducive to improving the active ion transport performance of the negative electrode film. As a result, the secondary battery is able to have high energy density as well as good cycling performance and dynamic performance.

In some embodiments of the present application, the second carbon-based material has a specific capacity greater than or equal to 353 mAh/g, optionally from 355 mAh/g to 365 mAh/g. When the specific capacity of the second carbon-based material is within the above range, on the one hand, it is possible to improve the energy density of the secondary battery, and on the other hand, it is possible to enable the second carbon-based material to have a good active ion transport performance, which is also conducive to improving the dynamic performance of the secondary battery.

In some embodiments of the present application, the second carbon-based material has a powder compaction density under 20000N pressure of 1.75 g/cm³ to 2.05 g/cm³, optionally from 1.78g/cm³ to 2.00g/cm³. When the powder compaction density of the second carbon-based material is within the above range, the compaction density of the negative electrode film can be improved, and the energy density of the secondary battery can be improved, and it is further conducive to the formation of a reasonable pore structure among particles of the negative electrode film, improving the performance of active ion and electron transport, improving the infiltration and retention characteristics of the negative electrode film to the electrolytic solution, and thus improving the cycling performance and the dynamic performance of the secondary battery.

In some embodiments of the present application, the second carbon-based material comprises artificial graphite, and the artificial graphite does not have a carbon coating layer on the surface. The artificial graphite has a more stable surface, and when the surface of the artificial graphite does not have a carbon coating layer, it is favorable to maintain its lower side reaction activity, which is favorable to reduce the occurrence of the side reaction, so as to be able to further improve the cycling performance of the secondary battery.

In some embodiments of the present application, the second carbon-based material has a volume average particle size Dv10 of 6 µm to 12 µm, optionally from 6.5 µm to 11.5 µm.

In some embodiments of the present application, the second carbon-based material has a volume average particle size Dv50 of 12.0 µm to 22.0 µm, optionally from 13.5 µm to 20.5 µm.

When the volume average particle size Dv10 and/or Dv50 of the second carbon-based material is within the above range, it is conducive to enhancing the performance of active ion and electron transport, which is capable of further enhancing the dynamic performance of the secondary battery, and it can also reduce the specific surface area of the second carbon-based material, reduce the occurrence of side reactions, and enhance the cycling performance of the secondary battery, and in addition, it can form with the first carbon-based material in the negative electrode film a reasonable pore structure, improving the infiltration and retention characteristics of the negative electrode film to the electrolytic solution.

In some embodiments of the present application, the second carbon-based material has a particle size distribution (Dv90-Dv10)/Dv50 of ≤1.65, optionally from 0.90 to 1.65.

When the particle size distribution (Dv90-Dv10)/Dv50 of the second carbon-based material is in the above range, it has a better particle stacking performance, which is conducive to improving the compaction density of the negative electrode film, improving the energy density of the secondary battery; furthermore, it is also conducive to the formation of a reasonable pore structure with the first carbon-based material in the negative electrode film, which enhances the active ion and electron transport performance, improves the infiltration and retention characteristics of the negative electrode film to the electrolytic solution, and thus enhances the cycling performance and the dynamic performance of the secondary battery.

In some embodiments of the present application, the second carbon-based material has a tap density of 0.85 g/cm³ to 1.30 g/cm³ optionally from 0.9 g/cm³ to 1.30 g/cm³. When the tap density of the second carbon-based material is within the above range, the compaction density of the negative electrode film can be improved, and the energy density of the secondary battery can be improved; furthermore, it is conducive to the formation of a reasonable pore structure with the first carbon-based material in the negative electrode film, which enhances the active ion and electron transport performance, improves the infiltration and retention characteristics of the negative electrode film to the electrolytic solution, and thus enhances the cycling performance and the dynamic performance of the secondary battery.

In some embodiments of the present application, the second carbon-based material has a specific surface area of 1.0 m²/g to 2.9 m²/g, optionally from 1.2 m²/g to 2.5 m²/g. When the specific surface area of the second carbon-based material is in the above range, it is favorable to reduce the occurrence of side reactions and the consumption of active ions by the formation of the SEI film, and thus is favorable for the secondary battery to have high initial coulombic efficiency as well as cycling performance. In addition, the second carbon-based material has good active ion de-intercalation performance, which can improve the dynamic performance of the secondary battery.

In some embodiments of the present application, the first carbon-based material comprises more than one pore structure with a pore area greater than or equal to 0.15 µm², optionally more than one pore structure with a pore area of from 0.15 µm² to 2.0 µm². When the first carbon-based material comprises a pore structure having a pore area as described above, the pore structure can reserve the required expansion space for the change in the particle volume thereof, thereby being able to further reduce the risk of the particle breakup generating a new interface, and thus being able to minimize the occurrence of a side reaction and improve the cycling performance of the secondary battery.

In some embodiments of the present application, the first carbon-based material comprises an external region and an internal region disposed on the inside of the external region, the external region being a region comprising a distance of 0.25 L extending from the surface of the particles of the first carbon-based material towards the interior of the particles, L being a short-axis length of the particles of the first carbon-based material; total pore area of the external region is denoted as S₁ and total pore area of the internal region is denoted as S₂, and S₂ > S₁. When the first carbon-based material further satisfies S₂ > S₁, it can enhance the initial coulombic efficiency and the cycling performance of the secondary battery.

In some embodiments of the present application, 1.5 ≤ S₂/S₁ ≤ 500, optionally 2 ≤ S₂/S₁ ≤ 450. When S₂/S₁ is also satisfied within the above range, the secondary battery can be made to better balance the high energy density and the good cycling performance.

In some embodiments of the present application, the pore structure in the external region of the first carbon-based material has an area of less than or equal to 0.15 µm², optionally less than or equal to 0.10 µm². By controlling the area of the pore structure in the external region of the first carbon-based material within the above range, the external region of the first carbon-based material can be made to have a dense structure, whereby the structural stability of the first carbon-based material can be effectively improved to avoid as much as possible the penetration of the electrolytic solution into the pore structure inside the particles of the first carbon-based material, which can then effectively improve the cycling performance of the secondary battery.

In some embodiments of the present application, the pore structure in the internal region of the first carbon-based material comprises more than one pore structure having an area greater than or equal to 0.15 µm², optionally comprises more than one pore structure having an area of from 0.15 µm² to 2.0 µm². By making the internal region of the first carbon-based material comprise a pore structure with the above size, on the one hand, the rolling pressure on the negative electrode plate can be effectively reduced to effectively minimize particle damage, and a sufficient and stable expansion space can be reserved for the change in the volume of the first carbon-based material particles, reducing the risk of breakup of the first carbon-based material particles, and on the other hand, the compaction density of the negative electrode film can be improved and the volume change of the negative electrode film can be buffered.

In some embodiments of the present application, the first carbon-based material has a specific surface area of 0.7 m²/g to 1.8 m²/g, optionally from 0.8 m²/g to 1.6 m²/g. The first carbon-based material has a relatively low specific surface area, so the consumption of active ions for the SEI film formation can be reduced, and the initial coulombic efficiency and cycling performance of the secondary battery can be improved.

In some embodiments of the present application, the first carbon-based material has a volume average particle size Dv50 of 8.0 µm to 25.0µm, optionally from 10.0 µm to 20.0 µm.

In some embodiments of the present application, the first carbon-based material has a volume average particle size Dv90 of 16.0 µm to 35.0µm, optionally from 17.0 µm to 32.0 µm.

When the volume average particle size Dv50 and/or Dv90 of the first carbon-based material is within the above range, it is favorable to improve the transport performance of active ions and electrons, which can further improve the dynamic performance of the secondary battery; in addition, it can further reduce the specific surface area of the first carbon-based material, reduce the occurrence of side reactions, and improve the cycling performance of the secondary battery. Furthermore, it can form a reasonable pore structure with the second carbon-based material in the negative electrode film, and enhance the infiltration and retention characteristics of the negative electrode film to the electrolytic solution.

In some embodiments of the present application, the first carbon-based material has a (Dv90-Dv10)/Dv50 of ≤ 1.50, optionally from 0.7 to 1.40.

When the (Dv90-Dv10)/Dv50 of the first carbon-based material is in the above range, it has a better particle stacking performance, which is conducive to improving the compaction density of the negative electrode film and thus improving the energy density of the secondary battery; furthermore, it is also favorable to the formation of a reasonable pore structure with the second carbon-based material in the negative electrode film, which enhances the active ion and electron transport performance, and enhances the infiltration and retention characteristics of the negative electrode film to the electrolytic solution, thus improving the cycling performance and dynamic performance of the secondary battery.

In some embodiments of the present application, the first carbon-based material has a powder compaction density under 20000N pressure of from 1.75g/cm³ to 1.95g/cm³, optionally from 1.80g/cm³ to 1.90g/cm³.

When the powder compaction density of the first carbon-based material is within the above range, the compaction density of the negative electrode film can be improved, and the energy density of the secondary battery can be improved; it further facilitates the formation of a reasonable pore structure with the first carbon-based material in the negative electrode film, improves the active ions and the electron transport performance, and improves the infiltration and retention characteristics of the negative electrode film to the electrolytic solution, and thus improves the cycling performance and dynamic performance of the secondary battery.

In some embodiments of the present application, the first carbon-based material has a tap density of from0.80 g/cm³ to 1.50 g/cm³, optionally from 0.85 g/cm³ to 1.45 g/cm³.

When the tap density of the first carbon-based material is within the above range, the compaction density of the negative electrode film can be improved, and the energy density of the secondary battery can be improved; it also facilitates the formation of a reasonable pore structure with the second carbon-based material of the negative electrode film, improves the active ions and the electron transport performance, improves the infiltration and retention characteristics of the negative electrode film to the electrolytic solution, and thus improves the cycling performance and the dynamic performance of the secondary battery.

In some embodiments of the present application, the first carbon-based material has a graphitization degree of ≥ 93.5%, optionally from 93.8% to 98%.

When the graphitization degree of the first carbon-based material is within the above range, the specific capacity is higher, which is conducive to improving the energy density of the secondary battery.

In some embodiments of the present application, the first carbon-based material has a powder OI value of 8-18, optionally from 8 to 16. When the powder OI value of the first carbon-based material is within the above range, it is favorable to receive active ions, and it is also favorable to reduce the thickness expansion rate of the negative electrode film.

In some embodiments of the present application, the first carbon-based material has a specific capacity of ≥ 354 mAh/g, optionally from 354 mAh/g to 370 mAh/g. Thus the energy density of the secondary battery can be enhanced.

In some embodiments of the present application, in the peak-splitting profile of the X-ray diffraction spectrum of the first carbon-based material, there are two diffraction peaks at 2θ ranging from 25.5° to 27.5°. When two diffraction peaks exist in the peak-splitting profile of the X-ray diffraction spectrum of the first carbon-based material at 2θ ranging from 25.5° to 27.5°, it is favorable to enhance the energy density and dynamic performance of the secondary battery.

In some embodiments of the present application, among the two diffraction peaks, the one with a smaller 2θ is recorded as a first peak, the one with a larger 2θ is recorded as a second peak, and the ratio of the peak intensity of the first peak to that of the second peak is 10:90 - 40:60. When the ratio of the peak intensity of the first peak to that of the second peak is in the above range, it is favorable for the secondary battery to better balance high energy density and good dynamic performance.

In some embodiments of the present application, the first carbon-based material is present in the first active material in an amount of ≥ 20wt%, optionally from 30wt% to 70wt%. When the amount of the first carbon-based material is within the above range, it is favorable for the secondary battery to have high energy density and good dynamic performance.

In some embodiments of the present application, the second region comprises a second active material comprising a third carbon-based material. Optionally, the third carbon-based material has a carbon coating layer on the surface, thereby favorably enhancing the dynamic performance of the secondary battery.

In some embodiments of the present application, the third carbon-based material comprises graphite having a carbon coating layer on the surface. Optionally, the graphite comprises at least one of artificial graphite and natural graphite.

In some embodiments of the present application, the third carbon-based material comprises artificial graphite having a carbon coating layer on the surface, and the artificial graphite comprises secondary particles; optionally, the artificial graphite comprises the secondary particles in a quantity proportion of ≥ 50%. When an appropriate proportion of secondary particles is included in the third carbon-based material, the active ion channels in the negative electrode film can be increased and the active ion intercalating path can be shortened, so that the dynamic performance of the secondary battery can be further improved, and the polarization of the battery can also be reduced and the occurrence of side reactions can be reduced, so that the secondary battery can be made to have a good cycling performance.

In some embodiments of the present application, (002) crystal planes of the second carbon-based material have an interplanar spacing smaller than that of (002) crystal planes of the third carbon-based material. The interplanar spacing of the third carbon-based material is larger, which is favorable for rapid de-intercalation of active ions, and thus the dynamic performance of the secondary battery can be further improved by adjusting that the interplanar spacing of (002) crystal planes of the second carbon-based material is smaller than the interplanar spacing of (002) crystal planes of the third carbon-based material.

In some embodiments of the present application, the graphitization degree of the second carbon-based material is greater than that of the third carbon-based material. The graphitization degree of the third carbon-based material is smaller and the interplanar spacing is larger, which is conducive to the rapid de-intercalation of the active ions, and thus the dynamic performance of the secondary battery can be further enhanced by adjusting the graphitization degree of the second carbon-based material to be larger than that of the third carbon-based material.

In some embodiments of the present application, the specific capacity of the second carbon-based material is greater than that of the third carbon-based material. The specific capacity of the third carbon-based material is smaller and the interplanar spacing is larger, which is favorable to the rapid de-intercalation of the active ions, and thus the dynamic performance of the secondary battery can be further enhanced; the specific capacity of the second carbon-based material and the first carbon-based material is higher, and thus it is favorable for the secondary battery to better balance high energy density and good dynamic performance.

In some embodiments of the present application, the powder compaction density of the second carbon-based material under 20000N pressure is greater than that of the third carbon-based material. By adjusting the powder compaction density of the second carbon-based material to be greater than that of the third carbon-based material, it is favorable for the negative electrode film to have a reasonable pore distribution in the thickness direction, so as to be able to enhance the performance of active ion and electron transport, to enhance the infiltration and retention characteristics of the negative electrode film to the electrolytic solution, to reduce the volume change of the negative electrode film, and thereby enhance the cycling performance, safety performance, and dynamic performance of the secondary battery.

In some embodiments of the present application, the powder compaction density of the first carbon-based material under 20000N pressure is greater than that of the third carbon-based material. By adjusting the powder compaction density of the first carbon-based material to be greater than that of the third carbon-based material, it is favorable for the negative electrode film to have a reasonable pore distribution in the thickness direction, so as to be able to enhance the performance of active ion and electron transport, to enhance the infiltration and retention characteristics of the negative electrode film to the electrolytic solution, to reduce the volume change of the negative electrode film, and thus to enhance the cycling performance, the safety performance, and the dynamic performance of the secondary battery.

In some embodiments of the present application, the volume average particle size Dv50 of the second carbon-based material is larger than that of the third carbon-based material. By adjusting the volume average particle size Dv50 of the second carbon-based material to be larger than that of the third carbon-based material, it is conducive to having a reasonable pore distribution of the negative electrode film in the thickness direction, so as to be able to improve the performance of active ion and electron transport, to improve the infiltration and retention characteristics of the negative electrode film to the electrolytic solution, and to reduce the volume change of the negative electrode film, thereby improving the cycling performance, safety performance, and dynamic performance of the secondary battery.

In some embodiments of the present application, the volume average particle size Dv50 of the first carbon-based material is larger than that of the third carbon-based material. By adjusting the volume average particle size Dv50 of the first carbon-based material to be larger than that of the third carbon-based material, it is conducive to having a reasonable pore distribution in the thickness direction of the negative electrode film, so as to be able to improve the performance of active ion and electron transport, to improve the infiltration and retention characteristics of the negative electrode film to the electrolytic solution, to reduce the volume change of the negative electrode film, thereby improving the cycling performance, safety performance, and dynamic performance of the secondary battery.

In some embodiments of the present application, the volume average particle size Dv50 of the third carbon-based material is from 10.0 µm to 22.0 µm, optionally from 11.5 µm to 20.0 µm. When the volume average particle size Dv50 of the third carbon-based material is in the above range, it is conducive to enhancing the transport performance of the active ions and the electrons, so as to be able to further enhance the dynamic performance of the secondary battery. In addition, the specific surface area of the third carbon-based material can be reduced, the occurrence of side reactions can be reduced and the cycling performance of the secondary battery can be improved.

In some embodiments of the present application, (Dv90-Dv10)/Dv50 of the third carbon-based material is ≤ 1.65, optionally from 0.90 to 1.65. When (Dv90-Dv10)/Dv50 of the third carbon-based material is within the above range, the particle stacking performance of the third carbon-based material is better, which is conducive to improving the compaction density of the negative electrode film, thus to further improve the energy density of the secondary battery; furthermore, it is also favorable for the negative electrode film to have a suitable pore distribution, to enhance the infiltration and retention characteristics of the negative electrode film to the electrolytic solution, and to enhance the cycling performance and dynamic performance of the secondary battery.

In some embodiments of the present application, the third carbon-based material has a powder OI value of 2.0-6.5, optionally from 2.0 to 6.0. The third carbon-based material has a smaller powder OI value, and the particles have active ion intercalating ports in all directions, whereby active ions from the positive electrode can be rapidly received, thereby further enhancing the dynamic performance of the secondary battery.

In some embodiments of the present application, the third carbon-based material has a powder compaction density under 20000 N pressure of from 1.65 g/cm³ to 2.00 g/cm³, optionally from 1.68 g/cm³ to 1.98 g/cm³. When the powder compaction density of the third carbon-based material is in the above range, it can enhance the compaction density of the negative electrode film, and enhance the energy density of the secondary battery; it is also conducive to having a suitable pore distribution, enhancing the performance of active ion and electron transport, enhancing the infiltration and retention characteristics of the negative electrode film to the electrolytic solution, and thus enhancing the cycling performance and dynamic performance of the secondary battery.

In some embodiments of the present application, the third carbon-based material has a tap density of 0.85 g/cm³ to 1.25 g/cm³, optionally from 0.90 g/cm³ to 1.25 g/cm³. When the tap density of the third carbon-based material is within the above range, it can improve the compaction density of the negative electrode film, and improve the energy density of the secondary battery; it is also conducive to having a suitable pore distribution of the negative electrode film, and improving the active ion and electron transport performance, improving the infiltration and retention characteristics of the negative electrode film to the electrolytic solution, and thus improving the cycling performance and dynamic performance of the secondary battery.

In some embodiments of the present application, the third carbon-based material has a graphitization degree of ≤ 96%, optionally from 90.5% to 95.5%. When the graphitization degree of the third carbon-based material is within the above range, it is conducive to enhancing the active ion transport performance of the negative electrode film, thereby facilitating the secondary battery to have high energy density and good dynamic performance.

In some embodiments of the present application, the third carbon-based material has a specific surface area of 0.9 m²/g to 2.5 m²/g, optionally from 0.95 m²/g to 2.45 m²/g. When the specific surface area of the third carbon-based material is in the above range, it is favorable to the rapid de-intercalation of the active ions to improve the dynamic performance of the secondary battery, and it is also capable of reducing the consumption of active ions for the formation of the SEI film to improve the initial coulombic efficiency of the secondary battery.

In some embodiments of the present application, the third carbon-based material has a specific capacity of 340 mAh/g to 360 mAh/g, optionally from 345 mAh/g to360 mAh/g. The specific capacity of the third carbon-based material is within the above range, on the one hand, it can enable the third carbon-based material to have a good active ion transport performance and improve the dynamic performance of the secondary battery, and on the other hand, it is also favorable for the secondary battery to have a higher energy density.

In some embodiments of the present application, the first region and/or the second region further comprises a silicon-based material. The silicon-based material can play a role in improving the pore structure in the negative electrode film, facilitating the infiltration and retention of the electrolytic solution, and enhancing the dynamic performance of the secondary battery; meanwhile it can further enhance the capacity of negative electrode, thereby further enhancing the energy density of the secondary battery.

In some embodiments of the present application, both the first region and the second region comprise a silicon-based material, and the mass proportion of the silicon-based material in the first region is less than or equal to the mass proportion of the silicon-based material in the second region. This thereby facilitates the enhancement of the infiltration characteristics of the negative electrode film to the electrolytic solution, the enhancement of the active ion transport performance, and the enhancement of the cycling performance and/or dynamic performance of the secondary battery.

In some embodiments of the present application, an intermediate region located between the first region and the second region comprises the first active material and/or the second active material.

A second aspect of the present application provides an electrical device comprising the secondary battery of the first aspect of the present application.

The electrical device of the present application comprises the secondary battery provided in the present application and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a negative electrode plate according to an embodiment of the present application.
FIG. 2 is a schematic diagram of a negative electrode plate according to another embodiment of the present application.
FIG. 3 is a schematic diagram of a negative electrode plate according to a further embodiment of the present application.
FIG. 4 is a schematic diagram of a cross-sectional image of a particle of a first carbon-based material of the present application.
FIG. 5 is a schematic diagram of a secondary battery according to an embodiment of the present application.
FIG. 6 is an exploded view of a secondary battery according to an embodiment of the present application.
FIG. 7 is a schematic diagram of a battery module according to an embodiment of the present application.
FIG. 8 is a schematic diagram of a battery pack according to an embodiment of the present application.
FIG. 9 is an exploded view of the battery pack according to the embodiment of the present application as shown in FIG. 8.
FIG. 10 is a schematic diagram of an electrical device according to an embodiment of the present application using the secondary battery of the present application as power.

The drawings are not drawn to actual scale. Reference numerals are as follows: 1. Battery pack; 2. Upper box body; 3. Lower box body; 4. Battery module; 5. Secondary battery; 51. Casing; 52. Electrode assembly; 53. Cover plate; 10. Negative electrode plate, 101. Negative electrode current collector, 102. Negative electrode film, 102. First surface, 102b. Second surface, 1021. First region, 1022. Second region, 1023. Intermediate region, 200. First carbon-based material; 201. External region; 202. Internal region.

### DETAILED DESCRIPTION

Hereinafter, embodiments of the secondary battery and the electrical device will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

Unless stated otherwise, the terms used in the present application have the well-known meanings commonly understood by those skilled in the art.

Unless stated otherwise, the values of the parameters mentioned in the present application may be determined by various test methods commonly used in the art, for example, according to the test methods given in the present application.

Unless stated otherwise, in the present application, the term "active ions" refers to ions, including but not limited to lithium ions, that can be intercalated and de-intercalated back and forth between the positive electrode and the negative electrode of the secondary battery

In the present application herein, the term "more than one" means two or more, unless otherwise stated and specifically limited.

The inventors have found that the key to improving the cycling performance of secondary batteries is to balance the energy density and charging ability of the batteries. Currently, the dynamic performance of the negative electrode is mostly improved by reducing the coating weight of the negative electrode film or reducing the compaction density of the negative electrode film. However, a large number of studies have proved that the above methods to improve the dynamics of the negative electrode only improve the dynamic performance of the battery at the early charging stage to a certain extent, and have no obvious effect on the improvement of the dynamics at the end of the battery charging stage, which results in the failure to effectively improve the dynamic performance of the secondary battery, and even leads to the impossibility of charging the secondary battery with large rate in practice. In addition, the energy density of the secondary battery is significantly reduced.

When the energy density of the secondary battery is improved by, for example, increasing the compaction density of the negative electrode film, the dynamic performance and cycling performance of the secondary battery often deteriorate; in addition, the volume change of the negative electrode film is increased, which further increases the risk of the bridging of the electrolytic solution, and affects the safety performance of the secondary battery.

As a result, it is difficult for current secondary batteries to have high energy density, high safety performance, and as well good cycling performance and dynamic performance.

The inventors have further conducted a lot of research and skillfully improved the composition of the negative electrode film to break the above bottleneck.

Specifically, a first aspect of the embodiments of the present application provides a secondary battery.

The present application has no particular limitation on the type of the secondary battery, for example, the secondary battery may be a lithium-ion battery or the like. Typically, the secondary battery comprises a positive electrode plate, a negative electrode plate, and an electrolyte and the like. During the charging and discharging process of the secondary battery, active ions are intercalated and de-intercalated back and forth between the positive electrode plate and the negative electrode plate, and the electrolyte plays the role of conducting active ions between the positive electrode plate and the negative electrode plate. The present application has no particular limitation on the type of the electrolyte, which may be selected according to actual needs. For example, the electrolyte may be selected from at least one of a solid electrolyte and a liquid electrolyte (i.e., an electrolytic solution). In the secondary battery employing an electrolytic solution, and in some secondary batteries employing a solid electrolyte, a separator may be included, which is provided between the positive electrode plate and the negative electrode plate to serve as an isolation.

### [Negative electrode plate]

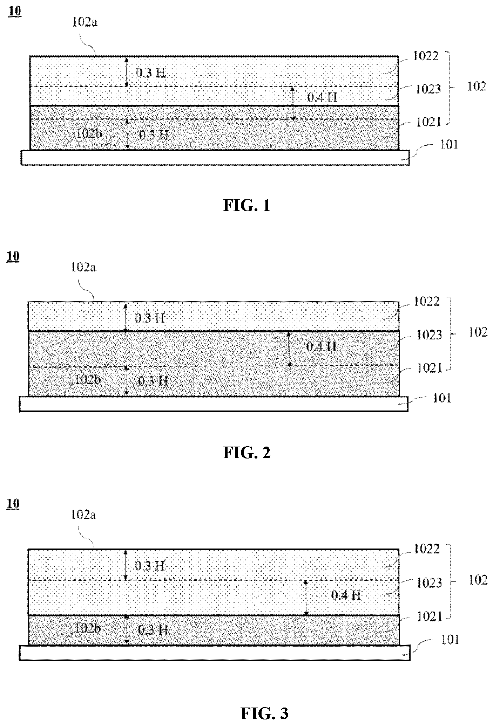

FIGS. 1 to 3 are schematic diagrams of a negative electrode plate according to an embodiment of the present application. As shown in FIGS. 1 to 3, the negative electrode plate 10 comprises a negative electrode current collector 101 and a negative electrode film 102 formed on at least one surface of the negative electrode current collector 101, wherein the negative electrode film 102 has a first surface 102a away from the negative electrode current collector 101 and a second surface 102b disposed opposite to the first surface 102a, a thickness of the negative electrode film 102 being denoted as H, a region within a thickness ranging from the second surface 102b of the negative electrode film to 0.3 H being denoted as a first region 1021 of the negative electrode film, a region within a thickness ranging from the first surface 102a of the negative electrode film to 0.3 H being denoted as a second region 1022 of the negative electrode film, wherein the first region 1021 comprises a first active material comprising a first carbon-based material and a second carbon-based material, and wherein the first carbon-based material has a pore structure, the second carbon-based material comprises artificial graphite. The thickness H of the negative electrode film is a thickness of the negative electrode film disposed on a single side of the negative electrode current collector.

In the present application, "the first carbon-based material having a pore structure" means that the first carbon-based material has a pore structure that can be directly observed from a cross-sectional image (e.g., a scanning electron microscope image with a magnification of 1000 times), i.e., the pore structure in the raw material used to prepare the first carbon-based material is not completely filled.

The inventors found in their research that by making the first region of the negative electrode film comprise both a first carbon-based material and a second carbon-based material, the first carbon-based material having a pore structure, and the second carbon-based material comprising artificial graphite, it is possible to make the negative electrode plate have high compaction density, low volume change, and high active ion transfer rate, whereby it is possible to make the secondary battery have high safety performance, as well as good dynamic performance and cycling performance, on the premise of having high energy density.

The inventors found in the in-depth study that the first carbon-based material has a pore structure, which is easy to deform when cold pressed, and when it is located in the first region of the negative electrode film, it can effectively reduce the rolling pressure on the negative electrode plate, which can effectively reduce the damage of the particles, and reduce the occurrence of side reactions; the pore structure of the first carbon-based material can also reserve the expansion space required for the volume change of the particles, which reduces the risk of the particles breaking up to produce new interfaces, and thus reduce the occurrence of side reactions; furthermore, when the first carbon-based material is located in the first region of the negative electrode film, it can also reduce its unfavorable effect on the dynamic performance of the secondary battery, and give full play to its advantages of high capacity and high compaction density, and improve the energy density of the secondary battery.

The second carbon-based material comprises artificial graphite, which has good dynamic performance and is conducive to enhancing the speed of active ions intercalated in the first region of the negative electrode film, enhancing the active ion transport performance of the negative electrode film, and enhancing the dynamic performance of the secondary battery; at the same time, the second carbon-based material can also form a good pore structure with the first carbon-based material that has a pore structure, enhance the infiltration and retention characteristics of the negative electrode film to the electrolytic solution, and reduce the volume change of the negative electrode film.

Therefore, the negative electrode plate provided in the present application can have a good pore structure, and at the same time have high compaction density, low volume change, and high active ion transfer rate, and can enable the secondary battery to have high safety performance, as well as good dynamic performance and cycling performance, on the premise of having high energy density.

In some embodiments, the second carbon-based material comprises secondary particles of artificial graphite. Optionally, the secondary particles of artificial graphite are present in the second carbon-based material in an amount greater than or equal to 50%, which may be, for example, 60%-95%, 60%-100%, 65%-85%, 70%-100%, 75%-90%, 75%-85%, 80%-100%, 80%-90%, 85%-95%, or 90%-100%. When the second carbon-based material comprises an appropriate proportion of secondary particles of artificial graphite, the active ion channels in the negative electrode film can be increased and the active ion intercalating path can be shortened, so that the dynamic performance of the secondary battery can be further improved, and the polarization of the battery can also be reduced, and the occurrence of side reactions can be reduced, so as to also enable the secondary battery to have good cycling performance and good dynamic performance.

In the present application, the quantity proportion of secondary particles of artificial graphite in the second carbon-based material refers to the average of statistical results obtained by taking randomly one test sample from the negative electrode film, taking randomly a plurality of test areas in the test sample, obtaining images of the plurality of test areas using a scanning electron microscope, and counting the proportion of the number of secondary particles of artificial graphite in the second carbon-based material in each image to the total number of particles in the second carbon-based material to obtain the average of the plurality of statistical results as the quantity proportion of secondary particles of artificial graphite in the second carbon-based material.

In some embodiments, (002) crystal planes of the second carbon-based material have an interplanar spacing greater than that of (002) crystal planes of the first carbon-based material. The larger interplanar spacing of the second carbon-based material facilitates rapid de-intercalation of active ions, and the interplanar spacing of the first carbon-based material is smaller, thus the specific capacity is higher. Therefore, by adjusting the interplanar spacing of the (002) crystal planes of the second carbon-based material in the first region of the negative electrode film to be greater than that of the (002) crystal planes of the first carbon-based material, it is favorable for the secondary battery to have high energy density as well as good dynamic performance.

In some embodiments, the second carbon-based material has a graphitization degree smaller than that of the first carbon-based material. The second carbon-based material has a smaller graphitization degree and a larger interplanar spacing, which is conducive to rapid de-intercalation of active ions, and the first carbon-based material has a higher graphitization degree and thus a higher specific capacity. Therefore, by adjusting the graphitization degree of the second carbon-based material in the first region of the negative electrode film to be smaller than that of the first carbon-based material, it is beneficial for the secondary battery to have high energy density as well as good dynamic performance.

In some embodiments, the second carbon-based material has a specific capacity less than that of the first carbon-based material. By combining the first carbon-based material having a high capacity with the second carbon-based material comprising artificial graphite for the first region of the negative electrode film, it is favorable for the secondary battery to have high energy density as well as good dynamic performance.

In some embodiments, (002) crystal planes of the second carbon-based material have an interplanar spacing less than or equal to 0.33600 nm, optionally from 0.33571 nm to 0.33600 nm. When the interplanar spacing of the second carbon-based material is within the above range, it has a high surface stability, which is capable of reducing the occurrence of side reactions, and at the same time it facilitates the rapid de-intercalation of the active ions, which is conducive to improving the active ion transport performance of the negative electrode film. As a result, the secondary battery is able to have high energy density as well as good cycling performance and dynamic performance.

In some embodiments, the second carbon-based material has a specific capacity greater than or equal to 353 mAh/g, optionally from 355 mAh/g to 365 mAh/g. When the specific capacity of the second carbon-based material is within the above range, on the one hand, it is possible to improve the energy density of the secondary battery, and on the other hand, it is possible to enable the second carbon-based material to have a good active ion transport performance, which is also conducive to improving the dynamic performance of the secondary battery.

In some embodiments, the second carbon-based material has a powder compaction density under 20000N pressure of from 1.75 g/cm³ to 2.05 g/cm³, optionally from 1.78g/cm³ to 2.00g/cm³. When the powder compaction density of the second carbon-based material is within the above range, the compaction density of the negative electrode film can be improved, and the energy density of the secondary battery can be improved; in addition, it is further conducive to forming a reasonable pore structure among particles of the negative electrode film, improving the performance of active ion and electron transport, improving the infiltration and retention characteristics of the negative electrode film to the electrolytic solution, and thus improving the cycling performance and the dynamic performance of the secondary battery.

In some embodiments, the second carbon-based material comprises artificial graphite, and the artificial graphite does not have a carbon coating layer on the surface. The artificial graphite has a more stable surface, and when the surface of the artificial graphite does not have a carbon coating layer, it is favorable to maintain its lower side reaction activity, which is favorable to reduce the occurrence of the side reaction, so as to be able to further improve the cycling performance of the secondary battery.

The inventors further found that when the second carbon-based material further satisfies one or more of the following conditions on the basis of satisfying the design described above, it can further improve the performance of the secondary battery, so as to enhance at least one of the energy density, the safety performance, the dynamic performance, and the cycling performance of the secondary battery.

In some embodiments, the second carbon-based material has a volume average particle size Dv10 of from 6 µm to 12 µm, optionally from 6.5 µm to 11.5 µm.

In some embodiments, the second carbon-based material has a volume average particle size Dv50 of from 12.0 µm to 22.0 µm, optionally from 13.5 µm to 20.5 µm.

When the volume average particle size Dv10 and/or Dv50 of the second carbon-based material is within the above range, it is conducive to enhancing the transport performance of active ions and electrons, which is capable of further enhancing the dynamic performance of the secondary battery, and it can also reduce the specific surface area of the second carbon-based material, reduce the occurrence of side reactions, and enhance the cycling performance of the secondary battery; in addition, it can form with the first carbon-based material in the negative electrode film a reasonable pore structure, improve the infiltration and retention characteristics of the negative electrode film to the electrolytic solution, reduce the volume change of the negative electrode film, and improve the cycling performance and safety performance of the secondary battery.

In some embodiments, the second carbon-based material has a particle size distribution (Dv90-Dv10)/Dv50 of ≤1.65, optionally from 0.90 to 1.65. When the particle size distribution (Dv90-Dv10)/Dv50 of the second carbon-based material is in the above range, it has a better particle stacking performance, which is conducive to improving the compaction density of the negative electrode film, improving the energy density of the secondary battery; furthermore, it is also conducive to the formation of a reasonable pore structure with the first carbon-based material in the negative electrode film, which enhances the active ion and electron transport performance, improves the infiltration and retention characteristics of the negative electrode film to the electrolytic solution, reduces the volume change of the negative electrode film, and thus enhances the cycling performance, safety performance and/or dynamic performance of the secondary battery.

In some embodiments, the second carbon-based material has a tap density of from 0.85 g/cm³ to 1.30 g/cm³, optionally from 0.9 g/cm³ to 1.30 g/cm³. When the tap density of the second carbon-based material is within the above range, the compaction density of the negative electrode film can be improved, and the energy density of the secondary battery can be improved; furthermore, it is conducive to the formation of a reasonable pore structure with the first carbon-based material in the negative electrode film, which enhances the active ion and electron transport performance, improves the infiltration and retention characteristics of the negative electrode film to the electrolytic solution, reduces the volume change of the negative electrode film, and thus enhances the cycling performance, safety performance and/or dynamic performance of the secondary battery.

In some embodiments, the second carbon-based material has a specific surface area of 1.0 m²/g to 2.9 m²/g, optionally from 1.2 m²/g to 2.5 m²/g. When the specific surface area of the second carbon-based material is in the above range, it is favorable to reduce the occurrence of side reactions and the consumption of active ions by the formation of the SEI membrane, and thus favorable for the secondary battery to have high initial coulombic efficiency as well as cycling performance. In addition, the second carbon-based material further has good active ion de-intercalation performance, which can improve the dynamic performance of the secondary battery.

In some embodiments, the first carbon-based material comprises more than one pore structure with a pore area greater than or equal to 0.15 µm², optionally more than one pore structure with a pore area of from 0.15 µm² to 2.0 µm². When the first carbon-based material comprises a pore structure having a pore area as described above, the pore structure can reserve the required expansion space for the change in the particle volume thereof, thereby being able to further reduce the risk of the particle breakup generating new interfaces, and thus being able to minimize the occurrence of side reactions and improve the cycling performance of the secondary battery.

In some embodiments, the first carbon-based material comprises an external region and an internal region disposed on the inside of the external region, the external region being a region comprising a distance of 0.25 L extending from the surface of the particles of the first carbon-based material towards the interior of the particles, L being a short-axis length of the particles of the first carbon-based material; total pore area of the external region is denoted as S₁ and total pore area of the internal region is denoted as S₂, and S₂ > S₁.

When the first carbon-based material further satisfies S₂ > S₁, the first carbon-based material is further characterized by a high number of pores and/or a large pore size in the internal region and a low number of pores and/or a small pore size in the external region. The pore structure of the internal region of the first carbon-based material can reduce the rolling pressure on the negative electrode plate, effectively minimizing particle damage, and also can reserve the required expansion space for the change in the volume of the particles, thereby reducing the risk of the particles breaking up to generate new interfaces, and thereby reducing the occurrence of side reactions; the number of pores in the external region of the first carbon-based material is less and/or the pore size is smaller, thereby enabling the first carbon-based material particles to have a stable structure and to minimize the permeation of the electrolytic solution into the pore structure inside the first carbon-based material particles, thereby being able to further minimize the occurrence of side reactions and reduce the consumption of active ions for SEI film formation inside the particles. Thus, when the first carbon-based material also satisfies S₂ > S₁, it is able to enhance the first coulombic efficiency and the cycling performance of the secondary battery.

In some embodiments, 1.5 ≤S₂/S₁ ≤ 500, 2 ≤S₂/S₁ ≤ 450, 2.2 ≤S₂/S₁ ≤ 400, 2.4 ≤S₂/S₁ ≤ 300, 2.5 ≤S₂/S₁ ≤ 250, 2.6 ≤S₂/S₁ ≤ 200, 2.8 ≤S₂/S₁ ≤ 150, 3.0 ≤S₂/S₁ ≤ 100. The inventors found in further research that when S₂/S₁ is further satisfied within the above ranges, the secondary battery can be made to better balance high energy density as well as good cycling performance.

In the present application, the total pore area S₁ of the external region and the total pore area S₂ of the internal region of the first carbon-based material can be obtained by testing a cross-sectional image of the first carbon-based material.

In the present application, the cross-sectional image of the first carbon-based material includes a cross-sectional image passing through a particle center of the first carbon-based material. "Particle center" means an area within a radius extending 0.1 µm from a geometric center of the particle toward the surface of the particle.

In the present application, the short axis length of the particle is the minimum value when a line connecting two points on the surface of the particle passes through the geometric center of the particle.

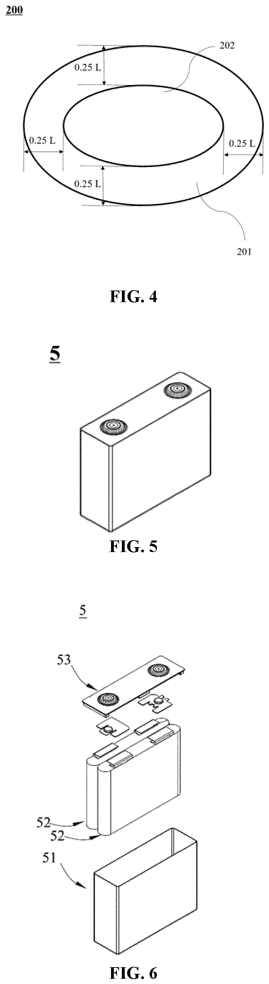

FIG. 4 is a schematic diagram of a cross-sectional image of a particle of the first carbon-based material 200 of the present application, and the cross-sectional image passes through the particle center of the first carbon-based material 200. As shown in FIG. 4, L denotes a short-axis length of a particle of the first carbon-based material 200, and a region comprising a distance of 0.25 L extending from the surface of the particle of the first carbon-based material 200 toward the interior of the particle is the external region 201, and the region inside the external region 201 is the interior region 202.

A cross-section of the first carbon-based material can be prepared using a cross section polisher (e.g., an argon ion Cross Section Polisher IB-09010 CP from JEOL Company of Japan); the cross-section of the first carbon-based material is then scanned using a scanning electron microscope (e.g., a Sigma 300 scanning electron microscope from e ZEISS Company of Germany) with reference to JY/T010-1996; and the cross-section of the first carbon-based material is finally scanned by an image processing software (e.g., AVIZO) to calculate the total pore area S₁ of the external region and the total pore area S₂ of the internal region of the first carbon-based material.

In some embodiments, the short axis length L of the particles of the first carbon-based material satisfies L ≥ 5.5 µm, optionally 6 µm ≤ L ≤ 20 µm, 8 µm ≤ L ≤ 20 µm, 8 µm ≤ L ≤ 18 µm, 8 µm ≤ L ≤ 16 µm.

In some embodiments, the pore structure in the external region of the first carbon-based material has an area of less than or equal to 0.15 µm², optionally less than or equal to 0.10 µm². The inventors found in further research that by controlling the area of the pore structure in the external region of the first carbon-based material within the above range, the external region of the first carbon-based material can be made to have a dense structure, whereby the structural stability of the first carbon-based material can be effectively improved to avoid as much as possible the penetration of the electrolytic solution into the pore structure inside the particles of the first carbon-based material, which can then effectively improve the cycling performance of the secondary battery. Of course, the present application does not intend to limit that all of the pore structures in the external region of the first carbon-based material have an area of less than or equal to 0.15 µm², for example, it can be controlled that more than 95%, optionally more than 99%, of the pore structures have an area of less than or equal to 0.15 µm².

In some embodiments, the internal region of the first carbon-based material comprises more than one pore structure having an area greater than or equal to 0.15 µm², optionally more than one pore structure having an area of from 0.15 µm² to 2.0 µm². The inventors found in further research that by making the internal region of the first carbon-based material comprise a pore structure with the above size, on the one hand, the rolling pressure on the negative electrode plate can be effectively reduced to effectively minimize particle damage, and a sufficient and stable expansion space can be reserved for the change in the volume of the first carbon-based material particles, reducing the risk of breakup of the first carbon-based material particles, and on the other hand, the compaction density of the negative electrode film can be improved and the volume change of the negative electrode film can be buffered.

The inventors further found that when the first carbon-based material further satisfies one or more of the following conditions on the basis of satisfying the design described above, it can further improve the performance of the secondary battery, so as to enhance at least one of the energy density, the dynamic performance, and the cycling performance of the secondary battery.

In some embodiments, the first carbon-based material has a specific surface area of 0.7 m²/g to 1.8 m²/g, optionally from 0.8 m²/g to 1.6 m²/g. The first carbon-based material has a relatively low specific surface area, thus the consumption of active ions for the SEI membrane formation can be reduced, and the initial coulombic efficiency and cycling performance of the secondary battery can be improved.

In some embodiments, the first carbon-based material has a volume average particle size Dv50 of 8.0 µm to 25.0µm, optionally from 10.0 µm to 20.0 µm.

In some embodiments, the first carbon-based material has a volume average particle size Dv90 of 16.0 µm to 35.0µm, optionally from 17.0 µm to 32.0 µm.

When the volume average particle size Dv50 and/or Dv90 of the first carbon-based material is within the above range, it is favorable to improving the performance of active ion and electron transport, which can further improve the dynamic performance of the secondary battery, and in addition, it can further reduce the specific surface area of the first carbon-based material, reduce the occurrence of side reactions, and improve the cycling performance of the secondary battery. Furthermore, it can form a reasonable pore structure with the second carbon-based material in the negative electrode film and enhance the infiltration and retention characteristics of the negative electrode film to the electrolytic solution.

In some embodiments, the first carbon-based material has a (Dv90-Dv10)/Dv50 of ≤ 1.50, optionally from 0.7 to 1.40. When the (Dv90-Dv10)/Dv50 of the first carbon-based material is in the above range, it has a better particle stacking performance, which is conducive to improving the compaction density of the negative electrode film and thus improving the energy density of the secondary battery; furthermore, it is also favorable to the formation of a reasonable pore structure with the second carbon-based material in the negative electrode film, which enhances the active ion and electron transport performance, and enhances the infiltration and retention characteristics of the negative electrode film to the electrolytic solution, thus improving the cycling performance and dynamic performance of the secondary battery.

In some embodiments, the first carbon-based material has a powder compaction density under 20000N pressure of from 1.75g/cm³ to 1.95g/cm³, optionally from 1.80g/cm³ to 1.90g/cm³. When the powder compaction density of the first carbon-based material is within the above range, the compaction density of the negative electrode film can be improved, and the energy density of the secondary battery can be improved; it further facilitates the formation of a reasonable pore structure with the first carbon-based material in the negative electrode film, improves the active ions and the electron transport performance, and improves the infiltration and retention characteristics of the negative electrode film to the electrolytic solution, and thus improves the cycling performance and dynamic performance of the secondary battery.

In some embodiments, the first carbon-based material has a tap density of from 0.80 g/cm³ to 1.50 g/cm³, optionally from 0.85 g/cm³ to 1.45 g/cm³. When the tap density of the first carbon-based material is within the above range, the compaction density of the negative electrode film can be improved, and the energy density of the secondary battery can be improved; it also facilitates the formation of a reasonable pore structure with the second carbon-based material of the negative electrode film, improves the active ions and the electron transport performance, improves the infiltration and retention characteristics of the negative electrode film to the electrolytic solution, and thus improves the cycling performance and the dynamic performance of the secondary battery.

In some embodiments, the first carbon-based material has a graphitization degree of ≥ 93.5%, optionally from 93.8% to 98%, from 94.5% to 98%, from 95.0% to 98%. When the graphitization degree of the first carbon-based material is within the above range, the specific capacity is higher, which is conducive to improving the energy density of the secondary battery.

In some embodiments, the first carbon-based material has a powder OI value of 8-18, optionally from 8 to 16. When the powder OI value of the first carbon-based material is within the above range, it is favorable to receive active ions, and it is also favorable to reduce the thickness expansion rate of the negative electrode film.

In some embodiments, the first carbon-based material has a specific capacity of ≥ 354 mAh/g, optionally from 354 mAh/g to 370 mAh/g. When the specific capacity of the first carbon-based material is within the above range, the energy density of the secondary battery can be enhanced.

In some embodiments, in the peak-splitting profile of the X-ray diffraction spectrum of the first carbon-based material, there are two diffraction peaks at 2θ of 25.5°-27.5°. When two diffraction peaks exist in the peak-splitting profile of the X-ray diffraction spectrum of the first carbon-based material at 2θ of 25.5°-27.5°, the first carbon-based material may comprise both a crystalline carbon component with a higher graphitization degree (e.g., a crystalline carbon with a graphitization degree of ≥95.0%) and a crystalline carbon component with a lower graphitization degree (e.g., a crystalline carbon with a graphitization degree of 70%-90%). The crystalline carbon component with a lower graphitization degree may have a larger interplanar spacing, thereby facilitating active ion diffusion and thus enhancing the dynamic performance of the secondary battery; and the crystalline carbon component with a higher graphitization degree may enable the first carbon-based material to have a high specific capacity and/or compaction density, enhancing the energy density of the secondary battery. Therefore, when two diffraction peaks exist in the peak-splitting profile of the X-ray diffraction spectrum of the first carbon-based material at 2θ of 25.5°-27.5°, it is favorable to enhance the energy density and dynamic performance of the secondary battery.

In some embodiments, among the two diffraction peaks, the one with a smaller 2θ is recorded as a first peak, the one with a larger 2θ is recorded as a second peak, and the ratio of the peak intensity of the first peak to that of the second peak is from 10:90 to 40:60, optionally from 15:85 to 35:65, or from 15:85 to 30:70. The inventors further found that when the ratio of the peak intensity of the first peak to that of the second peak is in the above range, it is favorable for the secondary battery to better balance high energy density and good dynamic performance.

The peak-splitting profile of the X-ray diffraction spectrum of the first carbon-based material is obtained by using Topas software via Rietveld full-spectrum fitting method to refine the X-ray diffraction spectrum of the first carbon-based material, and the 2θ of 25.5°-27.5° corresponds to the peak position of the carbon (002) crystal plane. The X-ray diffraction spectrum of the first carbon-based material can be tested using an X-ray diffractometer, and the test can be conducted with reference to JIS K 0131-1996, JB/T 4220-2011, and the test instrument can be a Bruker D8 Discover X-ray diffractometer. In the X-ray diffraction analysis test, the test conditions may be as follows: the first carbon-based material is sampled by the flat plate sampling method, a copper target is used as the anode target, and CuKα rays are used as the radiation source, with a voltage of 40 KV, a current of 40 mA, an anti-scattering slit of 1 mm, and a scanning 2θ angle in the range of 20°-80°, with a step length of 0.01671°, and a time duration of 0.24 s for each step, and a scanning rate of 4°/min. In peak-splitting profile of the X-ray diffraction spectrum of the first carbon-based material, the 2θ of the first peak is located between 26.256°-26.456°, and the 20 of the second peak is located between 26.509°-26.569°.

In the present application, the ratio of the peak intensity of the first peak to the peak intensity of the second peak is the ratio of the integrated area of the first peak to the integrated area of the second peak.

In some embodiments, the first carbon-based material is present in the first active material in an amount of ≥ 20wt%, optionally from 30wt% to 70wt%. When the amount of the first carbon-based material is within the above range, it is favorable for the secondary battery to have high energy density and good dynamic performance.

The second region 1022 comprises a second active material comprising a third carbon-based material.

In some embodiments, the third carbon-based material has a carbon coating layer on the surface. In some embodiments, more than 80% of the surface of the third carbon-based material is covered with the carbon coating layer, optionally, 90%-100% of the surface of the third carbon-based material is covered with the carbon coating layer. The third carbon-based material is located in the second region of the negative electrode film, and when it has a carbon coating layer on its surface, it is favorable to enhance the speed of active ions intercalated in the negative electrode film, and enhance the dynamic performance of the secondary battery.

In some embodiments, the carbon in the cladding layer comprises amorphous carbon, thereby favorably enhancing the dynamic performance of the secondary battery. The carbon may be formed by carbonization of an organic carbon source. The organic carbon source may be a carbon-containing material known in the art to be suitable for coating, and may comprise one or more of coal asphalt, petroleum asphalt, phenolic resins, coconut shells, and the like.

In some embodiments of the present application, the third carbon-based material comprises graphite having a carbon coating layer on the surface. Optionally, the graphite comprises at least one of artificial graphite and natural graphite.

In some embodiments of the present application, the third carbon-based material comprises artificial graphite having a carbon coating layer on the surface, and the artificial graphite comprises secondary particles; optionally, the artificial graphite comprises secondary particles in a quantity proportion of ≥ 50%, for example 50%-100%, 60%-95%, 60%-100%, 65%-85%, 70%-100%, 75%-90%, 75%-85%, 80%-100%, 80%-90%, 85%-95%, or 90%-100%. When the third carbon-based material includes the appropriate proportion of secondary particles, the active ion channels in the negative electrode film can be increased and the active ion intercalation path can be shortened, so that the dynamic performance of the secondary battery can be further improved, and the polarization of the battery can also be reduced and the occurrence of side reactions can be reduced, so that the secondary battery can be made to have good cycling performance.

In the present application, the quantity proportion of secondary particles in the artificial graphite refers to the average of statistical results obtained by taking randomly one test sample from the negative electrode film, taking randomly a plurality of test areas in the test sample, obtaining images of the plurality of test areas using a scanning electron microscope, and counting the ratio the proportion of the number of secondary particles of artificial graphite in the second region of the negative electrode film in each image to the total number of artificial graphite particles in the second region to obtain the average of the plurality of statistical results as the quantity proportion of secondary particles in the artificial graphite.

In some embodiments, (002) crystal planes of the second carbon-based material have an interplanar spacing smaller than that of (002) crystal planes of the third carbon-based material. The interplanar spacing of the third carbon-based material is larger, which is favorable for rapid de-intercalation of active ions, and thus the dynamic performance of the secondary battery can be further improved by adjusting that the interplanar spacing of (002) crystal planes of the second carbon-based material is smaller than the interplanar spacing of (002) crystal planes of the third carbon-based material.

In some embodiments, the graphitization degree of the second carbon-based material is greater than that of the third carbon-based material. The graphitization degree of the third carbon-based material is smaller and the interplanar spacing is larger, which is conducive to the rapid de-intercalation of the active ions, and thus the dynamic performance of the secondary battery can be further enhanced by adjusting the graphitization degree of the second carbon-based material to be larger than that of the third carbon-based material.

In some embodiments, the specific capacity of the second carbon-based material is greater than that of the third carbon-based material. The specific capacity of the third carbon-based material is smaller and the interplanar spacing is larger, which is favorable to the rapid de-intercalation of the active ions, and thus the dynamic performance of the secondary battery can be further enhanced; the specific capacity of the second carbon-based material and the first carbon-based material is higher, and thus it is favorable for the secondary battery to have high energy density and good dynamic performance.

In some embodiments, the powder compaction density under 20000N pressure of the second carbon-based material is greater than that of the third carbon-based material. By adjusting the powder compaction density of the second carbon-based material to be greater than that of the third carbon-based material, it is favorable for the negative electrode film to have a reasonable pore distribution in the thickness direction, so as to be able to enhance the transport performance of the activated ions and electrons, to enhance the infiltration and retention characteristics of the negative electrode film to the electrolytic solution, to reduce the volume change of the negative electrode film, and thereby enhance the cycling performance, safety performance, and dynamic performance of the secondary battery.

In some embodiments, the powder compaction density under 20000N pressure of the first carbon-based material is greater than that of the third carbon-based material. By adjusting the powder compaction density of the first carbon-based material to be greater than that of the third carbon-based material, it is favorable for the negative electrode film to have a reasonable pore distribution in the thickness direction, so as to be able to enhance the transport performance of the activated ions and electrons, to enhance the infiltration and retention characteristics of the negative electrode film to the electrolytic solution, to reduce the volume change of the negative electrode film, and thus to enhance the cycling performance, the safety performance, and the dynamic performance of the secondary battery.

In some embodiments the volume average particle size Dv50 of the second carbon-based material is larger than that of the third carbon-based material. By adjusting the volume average particle size Dv50 of the second carbon-based material to be larger than that of the third carbon-based material, it facilitates a reasonable pore distribution of the negative electrode film in the thickness direction, and thus improves the transport performance of the activated ions and electrons, improves the infiltration and retention characteristics of the negative electrode film to the electrolytic solution, and reduces the volume change of the negative electrode film, thereby improving the cycling performance, safety performance, and dynamic performance of the secondary battery.

In some embodiments, the volume average particle size Dv50 of the first carbon-based material is larger than that of the third carbon-based material. By adjusting the volume average particle size Dv50 of the first carbon-based material to be larger than that of the third carbon-based material, it is conducive to having a reasonable pore size distribution in the thickness direction of the negative electrode film, so as to be able to improve the transport performance of the active ions and the electrons, to improve the infiltration and retention characteristics of the negative electrode film to the electrolytic solution, to reduce the volume change of the negative electrode film, thereby improving the cycling performance, safety performance, and dynamic performance of the secondary battery.

The inventors further found that when the third carbon-based material further satisfies one or more of the following conditions on the basis of satisfying the design described above, it can further improve the performance of the secondary battery, so as to enhance at least one of the energy density, the dynamic performance, and the cycling performance of the secondary battery.

In some embodiments, the volume average particle size Dv50 of the third carbon-based material is from 10.0 µm to 22.0 µm, optionally from 11.5 µm to 20.0 µm. When the volume average particle size Dv50 of the third carbon-based material is in the above range, it is conducive to enhancing the performance of active ion and the electron transport, so as to be able to further enhance the dynamic performance of the secondary battery. In addition, the specific surface area of the third carbon-based material can be reduced, the occurrence of side reactions can be reduced and the cycling performance of the secondary battery can be improved.

In some embodiments, the (Dv90-Dv10)/Dv50 of the third carbon-based material is ≤ 1.65, optionally from 0.90 to 1.65. When the (Dv90-Dv10)/Dv50 of the third carbon-based material is within the above range, the particle stacking performance of the third carbon-based material is better, which is conducive to improving the compaction density of the negative electrode film, thus to further improve the energy density of the secondary battery; furthermore, it is also favorable for the negative electrode film to have a suitable pore distribution, to enhance the infiltration and retention characteristics of the negative electrode film to the electrolytic solution, and to enhance the cycling performance and dynamic performance of the secondary battery.

In some embodiments, the third carbon-based material has a powder OI value of from 2.0-6.5, optionally from 2.0 to 6.0. The third carbon-based material has a smaller powder OI value, and the particles have active ion intercalating ports in all directions, whereby active ions from the positive electrode can be rapidly received, thereby further enhancing the dynamic performance of the secondary battery. Moreover, at this time, the third carbon-based material particles have a high degree of isotropy, which is favorable to dispersing the expansion rate of the active ions when intercalating, reducing the expansion rate of the thickness of the negative electrode film, and thereby also further improving the cycling performance of the secondary battery.

In some embodiments, the third carbon-based material has a powder compaction density under 20000 N pressure of from 1.65 g/cm³ to 2.00 g/cm³, optionally from 1.68 g/cm³ to 1.98 g/cm³. When the powder compaction density of the third carbon-based material is in the above range, it can enhance the compaction density of the negative electrode film, and enhance the energy density of the secondary battery; it is also conducive to having a suitable pore distribution, enhancing the active ion and electron transport performance, enhancing the infiltration and retention characteristics of the negative electrode film to the electrolytic solution, and thus enhancing the cycling performance and dynamic performance of the secondary battery.

In some embodiments, the third carbon-based material has a tap density of from 0.85 g/cm³ to 1.25 g/cm³, optionally from 0.90 g/cm³ to 1.25 g/cm³. When the tap density of the third carbon-based material is within the above range, it can improve the compaction density of the negative electrode film, and improve the energy density of the secondary battery; it is also conducive to having a suitable pore distribution of the negative electrode film, and improving the active ion and electron transport performance, improving the infiltration and retention characteristics of the negative electrode film to the electrolytic solution, and thus improving the cycling performance and dynamic performance of the secondary battery.

In some embodiments, the third carbon-based material has a graphitization degree of ≤ 96%, optionally from 90.5% to 95.5%. When the graphitization degree of the third carbon-based material is within the above range, it is conducive to enhancing the active ion transport performance of the negative electrode film, thereby facilitating the secondary battery to have high energy density and good dynamic performance.

In some embodiments, the third carbon-based material has a specific surface area of 0.9 m²/g to 2.5 m²/g, optionally from 0.95 m²/g to 2.45 m²/g. When the specific surface area of the third carbon-based material is in the above range, it is favorable to the rapid de-intercalation of the active ions to improve the dynamic performance of the secondary battery, and it is also capable of reducing the consumption of active ions for the formation of the SEI membrane to improve the initial coulombic efficiency of the secondary battery.

In some embodiments, the third carbon-based material has a specific capacity of from 340 mAh/g to 360 mAh/g, optionally from 345 mAh/g to360 mAh/g. The specific capacity of the third carbon-based material is within the above range, on the one hand, it can enable the third carbon-based material to have a good active ion transport performance and improve the dynamic performance of the secondary battery, and on the other hand, it is also favorable for the secondary battery to have a higher energy density.

As shown in FIGS. 1 to 3, the negative electrode film 102 further comprises an intermediate region 1023 disposed between the first region 1021 of the negative electrode film and the second region 1022 of the negative electrode film and having a thickness of 0.4 H (H denotes the thickness of the negative electrode film 102).

In some embodiments, the intermediate region comprises the first active material and/or the second active material. For example, as shown in FIG. 2, the intermediate region 1023 may be compositionally identical to the first region 1021, whereby the first active material is distributed in the thickness direction of the negative electrode film 102 over a thickness ranging from the second surface 102b of the negative electrode film to 0.7 H. Alternatively, as shown in FIG. 3, the intermediate region 1023 may be compositionally identical to the second region 1022, whereby the second active material is distributed in the thickness direction of the negative electrode film 102 over a thickness ranging from the first surface 102a to 0.7 H of the negative electrode film; or, as shown in FIG. 1, the intermediate region 1023 comprises both the first active material and the second active material, whereby the intermediate region 1023 comprises both a layer structure having the first active material and a layer structure having the second active material, and the two-layer structure may further have a layer interface.

In some embodiments, the first region of the negative electrode film may further comprise other negative electrode active materials known in the art, in addition to the first carbon-based material and the second carbon-based material. For example, a silicon-based material may be further included, and the silicon-based material can play a role in improving the pore structure in the negative electrode film, facilitating the infiltration and retention of the electrolytic solution and enhancing the dynamic performance of the secondary battery; at the same time, it can also enhance the capacity of the negative electrode, so as to further enhance the energy density of the secondary battery. Optionally, the silicon-based material may comprise one or more of elemental silicon, silicon oxide, a silicon carbon compound, a silicon nitrogen compound, or a silicon alloy material.

In some embodiments, when the first region of the negative electrode film further comprises a silicon-based material, the silicon-based material is present in the first region of the negative electrode film in a mass proportion of ≤10%, for example, 1%-8%, 2%-6%, or 3%-7%. Thereby it is possible to improve the dynamic performance and energy density of the secondary battery while making the secondary battery have good cycling performance.

In some embodiments, the second region of the negative electrode film may further comprise other negative electrode active materials known in the art, in addition to the third carbon-based material. For example, a silicon-based material may be further included, and the silicon-based material can play a role in improving the pore structure in the negative electrode film, facilitating the infiltration and retention of the electrolyte, and enhancing the dynamic performance of the secondary battery; at the same time, it can also enhance the capacity of the negative electrode, so as to further enhance the energy density of the secondary battery. Optionally, the silicon-based material may comprise one or more of elemental silicon, silicon oxide, a silicon carbon compound, a silicon nitrogen compound, or a silicon alloy material.

In some embodiments, when the second region of the negative electrode film further comprises a silicon-based material, the silicon-based material is present in the second region of the negative electrode film in a mass proportion of ≤10%, for example, 1%-8%, 2%-6%, or 3%-7%. Thereby it is possible to improve the dynamic performance and energy density of the secondary battery while making the secondary battery have good cycling performance.

In some embodiments, both the first region and the second region comprise a silicon-based material, and a mass proportion of the silicon-based material in the first region is less than or equal to that of the silicon-based material in the second region. During the charging and discharging process of the secondary battery, the volume expansion of the silicon-based material is greater than that of the carbon-based material, thereby favoring a higher porosity of the second region of the negative electrode film, thereby favoring the enhancement of the infiltration characteristics of the negative electrode film to the electrolytic solution, the enhancement of the transport performance of the active ions, and the enhancement of the cycling performance and/or the dynamic performance of the secondary battery. In addition, due to the higher porosity of the second region of the negative electrode film, the active ion transport performance of the first region of the negative electrode film can also be enhanced.

In some embodiments, the intermediate region of the negative electrode film further comprises a silicon-based material.

In some embodiments, the first region, the second region, and the intermediate region of the negative electrode film further optionally comprise a negative electrode conductive agent and/or a negative electrode binder.

There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers.

There is no particular limitation on the type of the negative electrode binder in the present application. As an example, the negative electrode binder may comprise one or more of styrene butadiene rubber (SBR), water-soluble unsaturated resin SR-1B, water-based acrylic resin (such as polyacrylic acid PAA, polymethacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the first region, the second region, and the intermediate region of the negative electrode film may further optionally comprise other auxiliaries. As an example, the other auxiliaries may comprise a thickener, such as carboxymethyl cellulose sodium (CMC-Na) or a PTC thermistor material.

In some embodiments, the negative electrode film has a porosity of 18.0% to 36.7%, optionally from 19.0% to 34.0%. This facilitates the negative electrode film to have high capacity and a suitable pore structure, which in turn facilitates the secondary battery to have high energy density and good cycling performance and dynamic performance.

In some embodiments, the negative electrode film has a compaction density of from 1.50 g/cm³ to 1.85 g/cm³, optionally from 1.55 g/cm³ to 1.80 g/cm³, which is favorable for the negative electrode film to have high capacity and high performance of active ion and electron transport, which is in turn conducive to the secondary battery having high energy density as well as good cycling performance and dynamic performance.

In some embodiments, the negative electrode film has an areal density of 5.0g/cm² to 25.0g/cm², optionally from 5.5g/ cm² to 22.5g/cm². Thus, it is favorable for the negative electrode film to have high capacity, high performance of active ion and electron transport, which is favorable for the secondary battery to have high energy density as well as good cycling performance and dynamic performance.

In some embodiments, the negative electrode film has an OI value of ≤ 40.0, optionally from 5.0 to 40.0. It is conducive to improving the active ion intercalating performance of the negative electrode film, and it also enables the negative electrode film to have a low thickness expansion rate, which is conducive to good cycling performance and dynamic performance of the secondary battery.

In some embodiments, the negative electrode current collector may be a metal foil or a composite current collector. As an example of the metal foil, a copper foil or a copper alloy foil may be used. The composite current collector may include a polymeric material base layer and a metal material layer formed on at least one surface of the polymeric material base layer. As an example, the metal material may comprise one or more of copper, copper alloy, nickel, nickel alloy, titanium, titanium alloy, silver, and silver alloy, and the polymeric material base layer may include one or more of polypropylene (PP), polyethylene terephthalate (PET), polybutylene terephthalate (PBT), polystyrene (PS), and polyethylene (PE).

The negative electrode plate of the present application does not exclude other additional functional layers than the negative electrode film. For example, in some embodiments, the negative electrode plate described in the present application further comprises a conductive primer (e.g. being composed of a conductive agent and a binder) sandwiched between the negative electrode current collector and the negative electrode film and disposed on the surface of the negative electrode current collector. In some other embodiments, the negative electrode plate described in the present application further comprises a protective layer covering the surface of the negative electrode film.

The negative electrode current collector has two surfaces opposite to each other in the direction of its own thickness, and the negative electrode film is provided on either or both of the two opposite surfaces of the negative electrode current collector. It should be noted that each parameter of negative electrode film (e.g., compaction density, areal density, porosity, OI value, thickness, etc.) given in the present application refers to a parameter of the negative electrode film on a single side of the negative electrode current collector. When the negative electrode film is provided on both sides of the negative electrode current collector, the parameters of the negative electrode film on any one of the sides satisfy the present application, which is considered to fall within the scope of protection of the present application.

In the present application, the presence or absence of a coating layer on the surface of a material (e.g., a first carbon-based material, a second carbon-based material, a third carbon-based material, etc.) can be determined by transmission electron microscopy.

In the present application, the specific surface area of a material (e.g., a first carbon-based material, a second carbon-based material, a third carbon-based material, etc.) has a meaning known in the art, and can be measured by instruments and methods known in the art. For example, the specific surface area may be tested by a nitrogen adsorption specific surface area analysis test method with reference to GB/T 19587-2017, and calculated by a BET (Brunauer Emmett Teller) method. The nitrogen adsorption specific surface area analysis test may be performed by a Tri-Star 3020 specific surface area pore size analysis tester from Micromeritics, USA.

In the present application, the graphitization degree of a material (e.g., a first carbon-based material, a second carbon-based material, a third carbon-based material, etc.) has the meaning known in the art, and can be tested by instruments and methods known in the art. For example, the graphitization degree may be tested by an X-ray diffractometer (such as Bruker D8 Discover) with reference to JIS K 0131-1996 and JB/T 4220-2011 to obtain the average layer spacing d₀₀₂ of C(002) crystal plane in the crystalline structure of the material, and then calculated according to a formula g = (0.344 - d₀₀₂)/(0.344 - 0.3354)×100%. In the above formula, d₀₀₂ is an interlayer spacing between (002) crystal planes in the crystal structure of the material, expressed in nanometers (nm).

In the present application, the volume average particle sizes Dv10, Dv50, and Dv90 of a material (e.g., the first carbon-based material, the second carbon-based material, the third carbon-based material, etc.) have the meanings known in the art, which indicate the particle sizes corresponding to when the cumulative volume distribution percentage of the material reaches 10%, 50%, and 90%, respectively, and can be measured by instruments and methods known in the art. For example, it can be determined using a laser particle size analyzer with reference to GB/T 19077-2016. The testing instrument may be a Mastersizer 3000 laser particle size analyzer from Malvern Instruments Ltd. of the United Kingdom.

In the present application, the powder compaction density of a material (e.g., the first carbon-based material, the second carbon-based material, the third carbon-based material, etc.) has a meaning that is well known in the art, and can be tested by instruments and methods known in the art. For example, it can be tested by an electronic pressure tester (e.g., type UTM7305) with reference to standard GB/T24533-2009. The exemplary test method is as follows: weigh 1 g of material, add it to a mold with a bottom area of 1.327 cm², pressurize it to 2000 kg, hold the pressure for 30 s, and then release the pressure and hold it for 10 s, and then record and calculate to obtain the powder compaction density of the material under 20000N pressure.

In the present application, the tap density of a material (e.g., the first carbon-based material, the second carbon-based material, the third carbon-based material, etc.) has a meaning that is well known in the art, and can be determined using instruments and methods known in the art. For example, it can be determined using a powder tap density tester with reference to GB/T 5162-2006. The test instrument may be Dandong Baxter BT-301, with the following test parameters: vibration frequency: 250±15 times/minute, amplitude: 3±0.2 mm, number of vibrations: 5000 times, and measuring cylinder: 25 mL.

In the present application, the powder OI value of a material (e.g., the first carbon-based material, the third carbon-based material, etc.) has the meaning known in the art and can be tested by methods known in the art. For example, an X-ray diffractometer (e.g., a Bruker D8 Discover) may be used to conduct the test, and the test may be conducted with reference to JIS K 0131-1996, JB/T 4220-2011, to obtain the X-ray diffraction pattern of the powder sample, and the powder OI value of the sample may be calculated according to OI value = I₀₀₄/I₁₁₀, with I₀₀₄ being the integral area of the diffraction peak of the (004) crystal planes of crystalline carbon in the powder sample, and I₁₁₀ being the integral area of the diffraction peak of the (110) crystal plane of crystalline carbon in the powder sample. In the X-ray diffraction analysis test of the present application, a copper target may be used as the anode target, and CuKα rays are used as the radiation source, with a ray wavelength λ=1.5418 Å, a scanning 2θ angle ranging from 20°- 80°, and a scanning rate of 4°/min.

In the present application, both primary particles and secondary particles have meanings well known in the art. Primary particles are particles in a non-agglomerated state. Secondary particles are particles in an agglomerated state formed by the aggregation of two or more primary particles. Primary particles and secondary particles can be distinguished by using scanning electron microscope (SEM) images.

In the present application, the specific capacity of a material (e.g., the first carbon-based material, the second carbon-based material, the third carbon-based material, etc.) has a meaning well known in the art, and may be tested using methods known in the art. An exemplary test method is as follows: a slurry is made by mixing the sample powder with the conductive agent carbon black (Super P), the binder polyvinylidene fluoride (PVDF) at a mass ratio of 91.6:1.8:6.6 with the solvent N-methylpyrrolidone (NMP); the prepared slurry is applied on the surface of the negative electrode current collector copper foil, dried in an oven, and then set aside for use; ethylene carbonate (EC), methyl ethyl carbonate (EMC), diethyl carbonate (DEC) are mixed at a volume ratio of 1:1:1 to obtain organic solvents, and then LiPF₆ is dissolved in the above organic solvents, formulated into an electrolytic solution with a concentration of 1 mol/L; and then lithium metal sheet as the counter electrode, polyethylene (PE) film as the separator, and the electrolytic solution were assembled in the argon protected glove box into CR2430-type button battery; after the obtained button battery is left to stand for 12h, it is discharged to 0.005V at a constant current of 0.05C at 25°C for 10 minutes, then discharged to 0.005V at a constant current of 50 µA for 10 minutes, and discharged to 0.005V at a constant current of 10 µA for 10 minutes, and then charged to 2V at a constant current of 0.1C, and the charging capacity is recorded. The ratio of the charging capacity to the sample mass is the specific capacity of the corresponding material (e.g., the first carbon-based material, the second carbon-based material, the third carbon-based material, etc.).

In the present application, the areal density of the negative electrode film has the meaning known in the art, and can be measured by instruments and methods known in the art. An exemplary testing method is as follows: cutting a single-sided coated and cold-pressed negative electrode plate (for a double-sided coated negative electrode plate, a coating layer on one side can be wiped off first) into a small round plate with an area of S₁, weighing, and recording as M₁; and then wiping off the coating layer of the weighed negative electrode plate, weighing the negative electrode current collector, and recording as M₀, where the areal density of the negative electrode plate is (M₁ - M₀)/S₁.

For the purposes of the present application, the compaction density of the negative electrode film has a meaning known in the art and can be tested by methods known in the art. The compaction density of the negative electrode film = areal density of the negative electrode film /thickness of the negative electrode film. The thickness of the negative electrode film has the meaning known in the art, and can be tested by methods known in the art, such as by using a ten-thousandth caliper (e.g., a Mitutoyo 293-100 type with an accuracy of 0.1 µm).

In the present application, the porosity of the negative electrode film has a meaning known in the art and can be tested by methods known in the art. An exemplary test method is as follows: taking a single-sided coated and cold-pressed negative electrode plate (for a double-sided coated negative electrode plate, a negative electrode film on one side can be wiped off first), punching and cutting it into a small circular sample of a certain area, calculating the apparent volume V₁ of the negative electrode plate; referring to GB/T24586-2009, using an inert gas (such as helium or nitrogen) as the medium, adopting the gas replacement method, and measuring the true volume of the negative electrode plate V₂ by a true Density tester. Porosity of the negative electrode film = (V₁-V₂)/V₁ × 100%. Multiple samples (e.g., 30 slices) of good appearance, no powder off the edge of the negative electrode plate samples can be taken for testing, and the results are averaged, thus improving the accuracy of the test results. The testing instrument may be a Micromeritics AccuPyc II Model 1340 True Density Tester.

In the present application, the OI value of the negative electrode film has the meaning known in the art and can be tested by methods known in the art. For example, an X-ray diffractometer (e.g., a Bruker D8 Discover) may be used to conduct the test, and the test may be conducted with reference to JIS K 0131-1996, JB/T 4220-2011, to obtain the X-ray diffraction pattern of the negative electrode plate, and the OI value of the negative electrode film may be calculated according to OI value = I₀₀₄/I₁₁₀, with I₀₀₄ being the integral area of the diffraction peak of the (004) crystal planes of crystalline carbon in the negative electrode film, and I₁₁₀ being the integral area of the diffraction peak of the (110) crystal planes of crystalline carbon in the negative electrode film. In the X-ray diffraction analysis test of the present application, a copper target may be used as the anode target, and CuKα rays are used as the radiation source, with a ray wavelength λ=1.5418 Å, a scanning 2θ angle ranging from 20°- 80°, and a scanning rate of 4°/min.

It should be noted that the various parameter tests described above for the first active material, the second active material or the negative electrode film can be tested by taking samples from the prepared secondary battery according to the following steps.

The secondary battery is discharged (for safety reasons, the secondary battery is generally in a fully discharged state); the secondary battery is disassembled and the negative electrode plate is taken out, and the negative electrode plate is soaked for a certain period of time (e.g., 2h-10h) using dimethyl carbonate; the negative electrode plate is then taken out and dried at a certain temperature and time (e.g., at 60°C for more than 4h), and the negative electrode plate is taken out after drying. At this time, it is possible to take samples from the dried negative electrode plate to test the parameters related to the negative electrode film, such as the areal density, compaction density, porosity, OI value, etc. of the negative electrode film.

The above-dried negative electrode plate is baked at a certain temperature and time (e.g., 400°C for more than 2h), a region in the baked negative electrode plate is selected, and a sample of the second active material (optionally using a blade to scrap powder for sampling) is first taken, and the sampling location is the second region of the negative electrode film; and then the sample of the first active material is taken in the same way, and the sampling location is the first region of the negative electrode film; and the first active material and the second active material are sieved separately (e.g., sieving it through a 200-mesh sieve), and ultimately a sample of the first active material and the second active material that can be used to test the above parameters of the n material is obtained.

### [Method for Preparing a Negative Electrode Plate]

The present application further provides a method for preparing the negative electrode plate of the present application. The method comprises the steps of providing a first slurry comprising the first active material and a second slurry comprising the second active material; applying the first slurry on the negative electrode current collector and applying the second slurry on the first slurry, and obtaining the negative electrode plate after drying and cold pressing.

In some embodiments, the first active material, as well as an optional conductive agent, an optional binder, and other optional additives, can be dispersed in a solvent (e.g., deionized water) to form a first slurry.

In some embodiments, the second active material, as well as an optional conductive agent, an optional binder, and other optional additives, can be dispersed in a solvent (e.g., deionized water) to form a second slurry.

In some embodiments, the first active material comprises a mixture of a first carbon-based material and a second carbon-based material.

In some embodiments, the second active material comprises a third carbon-based material.

In some embodiments, the first slurry and/or the second slurry further comprises a silicon-based material.

The first slurry and the second slurry may be applied simultaneously in one pass or in two passes. In some embodiments, the first slurry and the second slurry are applied in one pass simultaneously. The one-pass simultaneous coating can reduce the negative electrode film's resistance, which can further improve the dynamic performance and cycling performance of the secondary battery.

The coating weights of the first slurry and the second slurry can be adjusted according to the actual situation.

In the present application, the first active material, the second active material and the like mentioned above can be obtained commercially, or can also be prepared by the methods described below in the present application.

In some embodiments, the method for preparing the first carbon-based material comprises: step 1, providing a raw material having a plurality of pore structures; step 2, mixing the raw material with a filling material according to a predetermined ratio, and thereafter holding the mixture at a first temperature T₁ for a first time t₁, and then cooling it to room temperature to obtain the intermediate; step 3, holding the obtained intermediate at a second temperature T₂ for a second time t₂, after which obtaining the first carbon-based material.

In some embodiments, in step 1, the raw material for preparing the first carbon-based material comprises natural graphite. Optionally, the natural graphite comprises one or more of flaky graphite, natural spherical graphite and microcrystalline graphite, more optionally comprising natural spherical graphite.

"Natural spherical graphite" refers to natural graphite having a spherical or spheroidal-like shape, and not all natural graphite particles are controlled to be ideally spherical. In some embodiments, the natural spherical graphite can be obtained by pre-treating the flaky graphite to obtain the desired particle size and morphology, optionally the pre-treatment comprising processes such as crushing, grading, spheronization, purification, etc.

In some embodiments, in step 1, the raw material may have a volume average particle size Dv50 of 7.0 µm-25.0 µm, optionally 10.0 µm-20.0 µm, thereby facilitating the preparation of the first carbon-based material having the desired volume average particle size.

In some embodiments, in step 1, the specific surface area of the raw material may be ≥ 2.5 m²/g, optionally 2.5 m²/g-10.0 m²/g. When the specific surface area of the raw material is within the above range, it is favorable to carry out subsequent filling treatment and obtain the first carbon-based material with the desired specific surface area, and it is also favorable for the first carbon-based material to have a high capacity and a high initial coulombic efficiency at the same time, and in addition, it is also facilitates the first carbon-based material to have better dynamic performance.

In some embodiments, in step 2, the filling material has a softening point of 102°C-175°C. Optionally, the softening point of the filling material is 106°C-162°C, 106°C-156°C, 106°C-150°C, 106°C-146°C, 106°C-142°C, 110°C-162°C, 110°C-156°C, 110°C-150°C, 110°C-146°C, or 110°C-142°C.

In some embodiments, in step 2, the volume average particle size Dv50 of the filler material is less than or equal to 6 µm, optionally 1 µm-6 µm, 1 µm-5 µm, 2 µm-5 µm, 3 µm-5 µm, thereby facilitating the filler material to be filled into the pore structure of the raw material after being subjected to heat and melting, and also facilitating the improvement of the dispersion uniformity of the filling material and the raw material.

In some embodiments, in step 2, the coking value of the filling material is from 19% to 47%, optionally from 22% to 40%. In the present application, the coking value of the filling material has a meaning known in the art and can be determined by instruments and methods known in the art. For example, it can be determined with reference to GB/T 8727-2008.

In some embodiments, in step 2, the filling material comprises one or more of coal asphalt, petroleum asphalt, polymer compounds and resins, optionally one or more of coal asphalt and petroleum asphalt.

In some embodiments, in step 2, the mass ratio of the filling material to the raw material is (10-40):100, optionally (10-30):100, (10-25):100, (10-20):100, (12-30):100, (12-20):100, (14-28):100, or (15-25): 100.

In step 2, by adjusting one or more parameters of the type, the softening point, the coking value, the addition amount, and the like of the filling material within the above mentioned ranges, it is favorable to adjust the number of pores and/or the size of the pores in the external region and the internal region of the first carbon-based material within a suitable range, and it is favorable to adjust the S₂/S₁ of the first carbon-based material within a suitable range.

By adjusting the parameters such as the type, the softening point, the coking value, and the addition amount of the filling material within the above range, the filling material, after being heated and melted, does not have a high viscosity, maintains good fluidity, and at the same time is not easy to bond the raw material particles, which is capable of reducing the agglomeration of the raw material particles in the subsequent preparation process, and thereby also reduces the problems such as an increase in the defects on the surface of the particles of the first carbon-based material and an increase in the number of surface-active sites and the like due to the need for additional depolymerization processes.

In some embodiments, in step 2, the heating process of mixing the raw material with the filling material in a predetermined proportion and then heating up to the first temperature T₁ may be a staged heating process.

In some embodiments, the staged heating process comprises a first heating process, a second heating process and a third heating process.

In some embodiments, the first heating process is heating to 200°C-250°C and holding at that temperature for 0.5h-3h.

In some embodiments, the second heating process is heating to 450°C-550°C and holding at that temperature for 0h-2h. When the holding time is 0h, it means that the heating to the range of 450°C-550°C is not held but continues to heat to the first temperature T₁.

In some embodiments, the third heating process is heating to the first temperature T₁ and holding at that temperature for a first time t₁.

In the staged heating process, the temperature is first raised to 200°C-250°C, and since the heating temperature is higher than the softening point of the filling material, the filling material is melted and softened by heating at this time, and holding the temperature for 0.5h-3h can make it flow and fill the pore structure of the raw material; and after that, the temperature is raised to 450°C-550°C, and at this time, the melted and softened filling material undergoes a carbonization reaction, and gradually forms a semi-coke state, and changes to a viscous liquid or solid, thereby preventing the filling material from entering all of the pore structure of the raw material; and finally heating to a first temperature, at which time the filling material undergoes a carbonization reaction, thereby enabling the pore structure occupied by the filling material to be effectively filled.

In some embodiments, in step 2, the temperature is raised to the first temperature T₁ at a rate of 1°C/min-10°C/min. For example, the rate of heating may be 1°C/min, 2°C/min, 3°C/min, 4°C/min, 5°C/min, 6°C/min, 7°C/min, 8°C/min, 9°C/min, 10°C/min, or in a range comprising any of the above values. Optionally, the heating rate is 1.5°C/min-8°C/min, 1.5°C/min-6°C/min, 2°C/min-6°C/min, or 2°C/min-5°C/min

In some embodiments, the heating rate of the first heating process may be 1°C/min-10°C/min, optionally 1.5°C/min-8°C/min, 1.5°C/min-6°C/min, 2°C/min-6°C/min, or 2°C/min-5°C/min.

In some embodiments, the heating rate of the second heating process may be 1°C/min-10°C/min, optionally 2°C/min-8°C/min.

In some embodiments, the heating rate of the third heating process may be 1°C/min-10°C/min, optionally 2°C/min-8°C/min.

In some embodiments, in step 2, the first temperature T₁ is 700°C-1200°C. For example the first temperature T₁ may be 700°C, 750°C, 800°C, 850°C, 900°C, 950°C, 1000°C, 1050°C, 1100°C, 1200°C, or in a range composed of any of the above values. Optionally, the first temperature T₁ is 750°C-1100°C, 800°C-1100°C, or 850°C-1000°C.

In some embodiments, in step 2, the first time t₁ is 1h-5h. For example, the first time t₁ may be 1h, 1.5h, 2h, 2.5h, 3h, 3.5h, 4h, 4.5h, 5h, or in a range comprising any of the above values. Optionally, the first time t₁ is 2h-4h.

In some embodiments, in step 2, the heat treatment may be carried out in equipment capable of programmed heating such as an intermediate frequency furnace, a roller kiln, a rotary kiln, a pusher kiln, a vertical granulating kettle, a horizontal granulating kettle, a vertical reactor, a horizontal reactor, or a drum furnace.

In some embodiments, in step 2, atmosphere for the heating treatment may be a protective gas atmosphere. The protective gas may include one or more of nitrogen, argon, helium.

In step 2, by adjusting one or more of the heating rate, the first temperature, the first time, the heating process, etc., within the range described above, it is favorable to adjust the number of pores and/or the size of the pores in the external region and the internal region of the first carbon-based material within a suitable range, which in turn is favorable to adjust the S₂/S₁ of the first carbon-based material within a suitable range.

In some embodiments, in step 3, the second temperature T₂ is 1960°C-2640°C. Optionally, the second temperature T₂ is 2025°C-2525°C, 2025°C-2475°C, 2025°C-2425°C, 2025°C-2375°C, 2075°C-2525°C, 2075°C-2475°C, 2075°C-2425°C, or 2075°C-2375°C.

In some embodiments, in step 3, the second time t₂ is 1.5h-6h. For example, the second time t₁ may be 2h, 2.5h, 3h, 3.5h, 4h, 4.5h, 5h, 5.5h, 6h or a range comprising any of the above values. Optionally, the second time t₂ is 2h-5h.

In some embodiments, in step 3, the heating treatment may be carried out in an intermediate frequency furnace, a chamber graphitization furnace, an Acheson graphitization furnace, a continuous graphitization furnace, or an inner string graphitization furnace.

In some embodiments, in step 3, atmosphere for the heating treatment in the medium frequency furnace, continuous graphitization furnace may be a protective gas atmosphere. The protective gas may include one or more of nitrogen, argon, helium.

In step 3, by adjusting one or more of the second temperature, the second time within the above range, it is advantageous to adjust the content of disordered carbon in the first carbon-based material within a suitable range, and it is advantageous for the first carbon-based material to have a suitable graphitization degree, interplanar spacing, and the like.

In the above-described preparation method of the first carbon-based material, by adjusting one or more of the parameters of the natural graphite, the parameters of the filling material, the heating rate, the first temperature, the first time, the heating process, the second temperature, the second time, and the like within the above-described range, it is advantageous to adjust S₂/S₁, graphitization degree, interplanar spacing, specific capacity, specific surface area, particle size, powder compaction density, tap density, powder OI value, and other parameters of the first carbon-based material.

### [Positive electrode plate]

In some embodiments, the positive electrode plate comprises a positive electrode current collector and a positive electrode film provided on at least one surface of the positive electrode current collector. For example, the positive electrode current collector has two surfaces opposite to each other in the direction of its own thickness, and the positive electrode film is provided on either or both of two opposite surfaces of the positive electrode current collector.

In some embodiments, the positive electrode current collector may be a metal foil or composite current collector. As an example of the metal foil, an aluminum foil may be used. The composite current collector may include a polymer material base layer and a metal material layer formed on at least one surface of the polymer material base layer. As an example, the metal material may include one or more selected from aluminum, aluminum alloy, nickel, nickel alloy, titanium, titanium alloy, silver, and silver alloy. As an example, the polymer material base layer may include one or more selected from polypropylene (PP), polyethylene terephthalate (PET), polybutylene terephthalate (PBT), polystyrene (PS), and polyethylene (PE).

In some embodiments, the positive electrode film may comprise a positive electrode active material, optional binder and optional conductive agent. The positive electrode film is usually formed by applying a positive electrode current collector with a positive electrode slurry, drying, and cold pressing. The positive electrode slurry is usually formed by dispersing a positive electrode active material, optional conductive agent, optional binder, and any other components in a solvent and stirring evenly. The solvent may be N-methylpyrrolidone (NMP), but is not limited thereto. As an example, the positive electrode binder may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. As an example, the positive electrode conductive agent may include one or more selected from superconducting carbon, conductive graphite, acetylene black, carbon black, Ketjen black, carbon dots, carbon nanotubes, graphene, and carbon nanofibers.

The positive electrode active material may be a positive electrode active material known in the art for use in secondary batteries.

When the secondary battery of the present application is a lithium-ion battery, the positive electrode active material may comprise at least one of a lithium transition metal oxide, a lithium-containing phosphate, and their respective modified compounds. Examples of lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt aluminium oxide, and modified compounds thereof. Examples of lithium-containing phosphates may include, but are not limited to, at least one of lithium iron phosphate, a composite of lithium iron phosphate and carbon, lithium manganese phosphate, a composite of lithium manganese phosphate and carbon, lithium ferromanganese phosphate, a composite of lithium ferromanganese phosphate and carbon, and their respective modified compounds.

In some embodiments, in order to further increase the energy density of the secondary battery, the positive electrode active material for the lithium-ion battery may include at least one of the lithium transition metal oxides with the formula LiₐNi_{b}Co_{c}M_{d}OₑA_{f} or modified compounds thereof, in which 0.8 ≤ a ≤ 1.2, 0.5 ≤ b < 1, 0 < c < 1, 0 < d < 1, 1 ≤ e ≤ 2, 0 ≤ f ≤ 1, M is selected from at least one of Mn, Al, Zr, Zn, Cu, Cr, Mg, Fe, V, Ti, and B, and A is selected from at least one of N, F, S, and Cl.

In some embodiments, as an example, the positive electrode active material for a lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}CO_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

In the present application, the modified compounds of the foregoing positive electrode active materials may undergo doping modification and/or surface coating modification of the positive electrode active materials.

### [Electrolyte]

In some embodiments, the electrolyte is an electrolytic solution comprising an electrolytic salt and an organic solvent.

The type of the electrolytic salt is not specifically limited and may be selected according to actual needs.

When the secondary battery of the present application is a lithium-ion battery, as an example, the electrolytic salt may include one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

The type of the solvent is not specifically limited and may be selected according to actual needs.As an example, the organic solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethyl sulfonyl ethane (ESE).

In some embodiments, the electrolytic solution may further optionally include additives. For example, the additives may include a negative electrode film-forming additive, a positive electrode film-forming additive, and additives that can improve some performances of batteries, such as an additive that improves overcharge performance of batteries, an additive that improves high-temperature performance of secondary batteries, and an additive that improves low-temperature power performance of batteries.

### [Separator]

There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used to encapsulate the electrode assembly and electrolyte.

In some embodiments, the outer package may be a hard case, such as a hard plastic case, an aluminum case, a steel case, and the like. The outer package may also be a soft package, such as a pouch-type soft package. A material of the soft bag can be plastic, such as at least one of polypropylene (PP), polybutylene terephthalate (PBT), and polybutylene succinate (PBS).

The shape of the secondary battery is not particularly limited in the present application, and it may be cylindrical, square, rectangular or any other shape. FIG. 5 is a schematic diagram of a secondary battery 5 of a rectangular structure as an example.

In some embodiments, as shown in FIG. 6, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

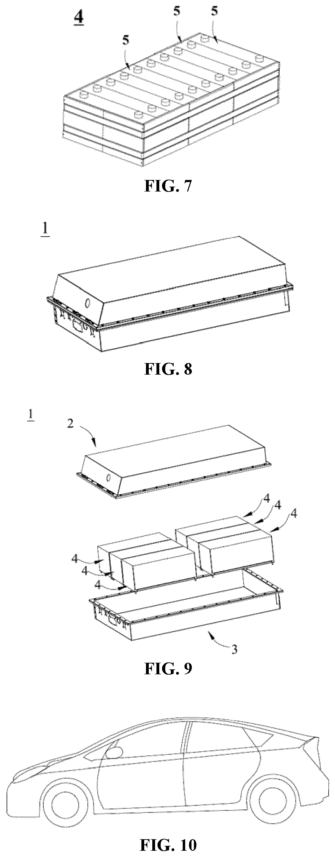

FIG. 7 is a schematic diagram of the battery module 4 as an example. As shown in FIG. 7, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

FIGS. 8 and 9 are schematic diagrams of the battery pack 1 as an example. As shown in FIGS. 8 and 9, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

The present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 10 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

In the following examples and comparative examples, the first carbon-based material can be prepared and obtained by the following methods of the present application.

### (1) Preparation of the first carbon-based material

The flaky graphite was mechanically crushed, graded, spheronized, and purified to obtain natural spherical graphite. The obtained natural spherical graphite was mixed with petroleum asphalt, after which the mixed material was placed in a programmable temperature-raising equipment for heating treatment in stages, and cooled to room temperature at the end of the process to obtain an intermediate. The obtained intermediate was placed in a graphitization furnace, heat-treated, and demagnetized and sieved to obtain the first carbon-based material. During the above process, the process for preparing the first carbon-based material given earlier in the present application can be regulated so that Dv50, interplanar spacing, and S₂/S₁ of the first carbon-based material were within the range shown in Table 1.

S₂/S₁ of the first carbon-based material was obtained by the following method: mixing the binder for making sample with the first carbon-based material powder and applying it to the copper foil, drying it at 60°C for 30 min; cutting the sample into 6mm×6mm size and pasting it on the sample stage of CP-type argon ion cross-section polisher; using the plasma beam to cut the sample to obtain the cross-section of the first carbon-based material and the cross-section of the first carbon-based material passes through the particle center of the first carbon-based material. The testing instrument can be an argon ion cross-section polisher IB-09010 CP from JEOL, Japan. The cross-section of the first carbon-based material was scanned using a scanning electron microscope. The test can be referred to JY/T010-1996, and the test instrument can be a Sigma 300 scanning electron microscope from ZEISS, Germany. The region comprising a distance of 0.25 L extending from the surface of the particles of the first carbon-based material to the inside of the particles was noted as the external region, the region inside the external region was noted as the internal region, and L denoted the short-axis length of the particles of the first carbon-based material. A total pore area S₁ of the external region of the first carbon-based material and a total pore area S₂ of the internal region of the first carbon-based material were calculated using an image processing software. The image processing software may be AVIZO.

The second carbon-based material and the third carbon-based material in each of the following examples and comparative examples can be obtained commercially.

### Secondary batteries of Examples 1-25 were all prepared as follows.

A mixture of a first carbon-based material and a second carbon-based material as first active material (see Table 1 for details, mass ratio 50:50), carbon black (Super P) as conductive agent, sodium carboxymethyl cellulose as thickener, and styrene-butadiene rubber as binder were thoroughly stirred and mixed in an appropriate amount of solvent deionized water at a weight ratio of 96.4:1:1.2:1.4 to form a first slurry. A third carbon-based material as second active material (see Table 1 for details), carbon black (Super P) as conductive agent, sodium carboxymethyl cellulose as thickener, and styrene-butadiene rubber as binder thoroughly stirred and mixed in an appropriate amount of solvent deionized water at a weight ratio of 96.4:1:1.2:1.4 to form a second slurry. The first slurry and the second slurry are extruded simultaneously through a dual-chamber coating apparatus. The first slurry was applied on the negative electrode current collector copper foil, and the second slurry was applied on the first slurry; after drying and cold pressing, the negative electrode plate was obtained. The coating weight of the first slurry and the second slurry was the same. The compaction density of the negative electrode film was from 1.72g/cm³ to 1.76g/cm³.

Lithium iron phosphate was mixed with the conductive agent carbon black (Super P) and the binder polyvinylidene fluoride at a weight ratio of 96:2:2, and an appropriate amount of solvent NMP was added, and the mixture was stirred well to obtain the positive electrode slurry. The positive electrode slurry was applied on the two surfaces of the positive electrode current collector aluminum foil, and after drying and cold pressing, the positive electrode plate was obtained.

An organic solvent was obtained by mixing ethylene carbonate (EC), methyl ethyl carbonate (EMC), and diethyl l carbonate (DEC) at a volume ratio of 1:1:1, and then LiPF₆ was dissolved in the above organic solvent to formulate an electrolytic solution with a concentration of 1 mol/L.

A polyethylene membrane was used as the separator, and the separator, the positive electrode plate and the negative electrode plate prepared above were put in order, so that the separator was in the middle of the positive electrode plate and the negative electrode plate to play a role of isolation, and then the electrode assembly was obtained after winding; the electrode assembly was placed in the outer package, dried and injected with electrolytic solution, and the secondary battery was obtained after vacuum encapsulation, resting, chemical formation, shaping, and other processes.

### Comparative Example 1

The method for preparing the secondary battery of Comparative Example 1 was similar to that of Examples 1-25, except the preparation of the negative electrode plate.

The third carbon-based material shown in Table 1, the conductive agent carbon black (Super P), the thickener sodium carboxymethyl cellulose, and the binder styrene-butadiene rubber were mixed by thorough stirring in an appropriate amount of the solvent deionized water at a weight ratio of 96.4:1:1.2:1.4 to form a slurry. The slurry was applied on the negative electrode current collector copper foil, and after drying and cold pressing, the negative electrode plate was obtained. The compaction density of the negative electrode film was from 1.72g/cm³ to 1.76g/cm³.

### Test section

### (1) Test for fast-charging performance of secondary battery

At 25°C, the secondary battery prepared above was charged at 0.33C constant current to a charging cutoff voltage of 3.65V, after which it was charged at constant voltage to a current of 0.05C, left to stand for 5min, and then discharged at 0.33C constant current to a discharging cutoff voltage of 2.5V, and the actual capacity was recorded as C0.

Then the secondary battery was sequentially charged with a constant current of 1.0C0, 1.3C0, 1.5C0, 1.8C0, 2.0C0, 2.3C0, 2.5C0, 3.0C0 to a charging cutoff voltage of 3.65V or negative electrode cutoff potential of 0V (whichever was reached first), and each time the charging was completed it was required to be discharged to the full battery discharging cutoff voltage of 2.5V at 1C0. The negative electrode potentials corresponding to 10%, 20%, 30% ......80% SOC (State of Charge) charged at different charging rates were recorded, and the rate vs. negative electrode potential curves were potted for different SOC states. After linear fitting, the charging rates when the negative electrode potential was 0V for different SOC states were obtained, and the charging rates were the charging windows for the respective SOC states, which were recorded as C10%SOC, C20%SOC, C30%SOC, C40%SOC, C50%SOC, C60%SOC, C70%SOC, and C80%SOC, respectively. (60/C20%SOC + 60/C30%SOC + 60/C40%SOC + 60/C50%SOC + 60/C60%SOC + 60/C70%SOC + 60/C80%SOC ) × 10% was calculated to obtain a charging time T in minutes for charging this secondary battery from 10% SOC to 80% SOC (under the condition that no lithium plating occurs in the secondary battery). The shorter the charging time T, the better the dynamic performance of the secondary battery.

### (2) Test for cycling performance of secondary battery

At 45°C, the secondary battery was charged to 3.65V with a constant current of 1C, and then charged with a constant voltage to a current of 0.05C, and after standing for 5min, the secondary battery was discharged to 2.5V with a constant current of 1C, and the discharging capacity at this time was recorded, which was the initial discharged capacity. The secondary battery was tested by cyclic charging and discharging in accordance with the above method, and the discharging capacity after each cycle was recorded until the discharging capacity of the secondary battery after cycling decayed to 80% of the initial discharging capacity, at which time the test was stopped, and the number of cycles of the secondary battery was recorded.

### (3) Test for thickness expansion rate of negative electrode film

At 25°C, the secondary battery was charged to 3.65V with a constant current of 0.33C, then charged with the constant voltage to a current of 0.05C, and after standing for 10min, the negative electrode plate in 100% SOC state was taken, and the average thickness of the negative electrode film was measured, which was recorded as D₁. The thickness expansion rate of the negative electrode plate = (D₁-D₀)/D₀, in which D₀ represented the average thickness of the negative electrode film of the negative electrode plated after cold pressing.

The negative electrode film of Comparative Example 1 included only the third carbon-based material, and the powder compaction density of the third carbon-based material was relatively low, whereby when the energy density of the battery was increased by enhancing the compaction density of the negative electrode film (the compaction density of the negative electrode film of Comparative Example 1 was from 1.72 g/cm³ to 1.76 g/cm³), the cycling and dynamic performances of the battery deteriorated, and at the same time, the thickness expansion rate of the negative electrode film was higher. In addition, since the specific capacity of the third carbon-based material was lower, the effect of improving the energy density of the battery by means of improving the compaction density of the electrode plate film was limited.

The first carbon-based material and/or the second carbon-based material had the advantage of high capacity, and as can be seen from Table 1, by making the first region of the negative electrode film comprise both the first carbon-based material having a pore structure and the second carbon-based material comprising artificial graphite, it enabled the negative electrode plate to have both a high compaction density and a low volume change, and at the same time, the negative electrode film can also have a reasonable pore distribution, which was favorable for active ion transmission, thereby enabling the battery to have high safety performance and good dynamic and cycling performance on the premise of having high energy density.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

**Table 1**

| No. | First region of negative electrode film | | | | | | | | | | Second region of negative electrode film | | | | | | Performance | | |
|---|---|---|---|---|---|---|---|---|---|---|---|---|---|---|---|---|---|---|---|
| | First carbon-based material | | | | Second carbon-based material | | | | | | Third carbon-based material | | | | | | | | |
| | Morphology | Dv50 (µm) | Interplanar spacing of (002) crystal planes (nm) | S₂/S₁ | Coating | Type | Mass proportion of secondary particle | Interplanar spacing of (002) crystal planes (nm) | Specific capacity (mAh/g) | Powder compaction density under 20000N (g/cm³) | Coating | Type | Mass proportion of secondary particle | Interplanar spacing of (002) crystal planes (nm) | Dv50 (µm) | Powder compaction density under 20000N (g/cm³) | thickness expansion rate of negative electrode film | Charging time T (min) | Number of cycles of battery |
| Example 1 | Primary particle | 15 | 0.33569 | 50.0 | No | Artificial graphite | 75% | 0.33583 | 360.0 | 1.80 | Yes | Artificial graphite | 75% | 0.33596 | 12 | 1.67 | 20.0% | 20.5 | 2500 |
| Example 2 | Primary particle | 8 | 0.33569 | 50.0 | No | Artificial graphite | 75% | 0.33583 | 360.0 | 1.80 | Yes | Artificial graphite | 75% | 0.33596 | 12 | 1.67 | 21.8% | 19.6 | 2200 |
| Example 3 | Primary particle | 13.5 | 0.33569 | 50.0 | No | Artificial graphite | 75% | 0.33583 | 360.0 | 1.80 | Yes | Artificial graphite | 75% | 0.33596 | 12 | 1.67 | 20.4% | 20.1 | 2450 |
| Example 4 | Primary particle | 20 | 0.33569 | 50.0 | No | Artificial graphite | 75% | 0.33583 | 360.0 | 1.80 | Yes | Artificial graphite | 75% | 0.33596 | 12 | 1.67 | 19.5% | 20.9 | 2530 |
| Example 5 | Primary particle | 25 | 0.33569 | 50.0 | No | Artificial graphite | 75% | 0.33583 | 360.0 | 1.80 | Yes | Artificial graphite | 75% | 0.33596 | 12 | 1.67 | 19.0% | 21.4 | 2580 |
| Example 6 | Primary particle | 6 | 0.33569 | 50.0 | No | Artificial graphite | 75% | 0.33583 | 360.0 | 1.80 | Yes | Artificial graphite | 75% | 0.33596 | 12 | 1.67 | 23.0% | 19.0 | 2100 |
| Example 7 | Primary particle | 30 | 0.33569 | 50.0 | No | Artificial graphite | 75% | 0.33583 | 360.0 | 1.80 | Yes | Artificial graphite | 75% | 0.33596 | 12 | 1.67 | 18.5% | 22.2 | 2600 |
| Example 8 | Primary particle | 15 | 0.33550 | 1.1 | No | Artificial graphite | 75% | 0.33583 | 360.0 | 1.80 | Yes | Artificial graphite | 75% | 0.33596 | 12 | 1.67 | 23.2% | 19.5 | 2080 |
| Example 9 | Primary particle | 15 | 0.33565 | 1.5 | No | Artificial graphite | 75% | 0.33583 | 360.0 | 1.80 | Yes | Artificial graphite | 75% | 0.33596 | 12 | 1.67 | 22.5% | 19.8 | 2200 |
| Example 10 | Primary particle | 15 | 0.33567 | 2.0 | No | Artificial graphite | 75% | 0.33583 | 360.0 | 1.80 | Yes | Artificial graphite | 75% | 0.33596 | 12 | 1.67 | 21.5% | 20.3 | 2350 |
| Example 11 | Primary particle | 15 | 0.33572 | 450.0 | No | Artificial graphite | 75% | 0.33583 | 360.0 | 1.80 | Yes | Artificial graphite | 75% | 0.33596 | 12 | 1.67 | 19.4% | 20.8 | 2530 |
| Example 12 | Primary particle | 15 | 0.33574 | 500.0 | No | Artificial graphite | 75% | 0.33583 | 360.0 | 1.80 | Yes | Artificial graphite | 75% | 0.33596 | 12 | 1.67 | 19.0% | 21.2 | 2560 |
| Example 13 | Primary particle | 15 | 0.33576 | 600.0 | No | Artificial graphite | 75% | 0.33583 | 360.0 | 1.80 | Yes | Artificial graphite | 75% | 0.33596 | 12 | 1.67 | 18.8% | 22.8 | 2500 |
| Example 14 | Primary particle | 15 | 0.33569 | 50.0 | No | Artificial graphite | 25% | 0.33583 | 360.0 | 1.85 | Yes | Artificial graphite | 75% | 0.33596 | 12 | 1.67 | 18.8% | 22.0 | 2560 |
| Example 15 | Primary particle | 15 | 0.33569 | 50.0 | No | Artificial graphite | 50% | 0.33583 | 360.0 | 1.83 | Yes | Artificial graphite | 75% | 0.33596 | 12 | 1.67 | 19.5% | 20.9 | 2530 |
| Example 16 | Primary particle | 15 | 0.33569 | 50.0 | No | Artificial graphite | 100% | 0.33583 | 360.0 | 1.75 | Yes | Artificial graphite | 75% | 0.33596 | 12 | 1.67 | 21.0% | 20.1 | 2460 |
| Example 17 | Primary particle | 15 | 0.33569 | 500 | No | Artificial graphite | 75% | 0.33626 | 350.0 | 1.70 | Yes | Artificial graphite | 75% | 0.33596 | 12 | 1.67 | 23.1% | 19.4 | 2200 |
| Example 18 | Primary particle | 15 | 0.33569 | 50.0 | No | Artificial graphite | 75% | 0.33600 | 355.0 | 1.75 | Yes | Artificial graphite | 75% | 0.33596 | 12 | 1.67 | 22.0% | 19.8 | 2350 |
| Example 19 | Primary particle | 15 | 0.33569 | 50.0 | No | Artificial graphite | 75% | 0.33571 | 365.0 | 1.89 | Yes | Artificial graphite | 75% | 0.33596 | 12 | 1.67 | 19.4% | 20.9 | 2520 |
| Example 20 | Primary particle | 15 | 0.33569 | 50.0 | No | Artificial graphite | 75% | 0.33566 | 369.0 | 2.05 | Yes | Artificial graphite | 75% | 0.33596 | 12 | 1.67 | 19.0% | 21.4 | 2540 |
| Example 21 | Primary particle | 15 | 0.33569 | 50.0 | No | Artificial graphite | 75% | 0.33583 | 360.0 | 1.80 | Yes | Artificial graphite | 75% | 0.33596 | 10 | 1.65 | 20.5% | 19.4 | 2450 |
| Example 22 | Primary particle | 15 | 0.33569 | 50.0 | No | Artificial graphite | 75% | 0.33583 | 360.0 | 1.80 | Yes | Artificial graphite | 75% | 0.33596 | 14 | 1.70 | 20.1% | 20.8 | 2510 |
| Example 23 | Primary particle | 15 | 0.33569 | 50.0 | No | Artificial graphite | 75% | 0.33583 | 360.0 | 1.80 | Yes | Artificial graphite | 75% | 0.33596 | 20 | 1.72 | 20.7% | 21.4 | 2480 |
| Example 24 | Primary particle | 15 | 0.33569 | 50.0 | No | Artificial graphite | 75% | 0.33583 | 360.0 | 1.80 | Yes | Artificial graphite | 75% | 0.33596 | 22 | 1.73 | 21.6% | 21.8 | 2350 |
| Example 25 | Primary particle | 15 | 0.33569 | 50.0 | No | Artificial graphite | 75% | 0.33583 | 360.0 | 1.80 | Yes | Artificial graphite | 75% | 0.33596 | 25 | 1.75 | 22.8% | 22.5 | 2150 |
| Comparative Example 1 | / | / | / | / | / | / | / | / | / | / | Yes | Artificial graphite | 75% | 0.33596 | 12 | 1.67 | 24.0% | 24.0 | 2000 |

## Claims

1. A secondary battery comprising a negative electrode plate, wherein the negative electrode plate comprises a negative electrode current collector and a negative electrode film formed on at least one surface of the negative electrode current collector, wherein the negative electrode film has a first surface away from the negative electrode current collector and a second surface disposed opposite to the first surface, a thickness of the negative electrode film being denoted as H, a region within a thickness ranging from the second surface of the negative electrode film to 0.3 H being denoted as a first region of the negative electrode film, a region within a thickness ranging from the first surface of the negative electrode film to 0.3 H being denoted as a second region of the negative electrode film, wherein the first region comprises a first active material comprising a first carbon-based material and a second carbon-based material, and wherein the first carbon-based material has a pore structure, the second carbon-based material comprises artificial graphite.

2. The secondary battery according to claim 1, wherein the second carbon-based material comprises artificial graphite of secondary particles; optionally, the quantity proportion of the artificial graphite of secondary particles in the second carbon-based material is greater than or equal to 50%.

3. The secondary battery according to claim 1 or 2, wherein (002) crystal planes of the second carbon-based material have an interplanar spacing greater than that of (002) crystal planes of the first carbon-based material, and/or wherein the second carbon-based material has a graphitization degree smaller than that of the first carbon-based material.

4. The secondary battery according to any one of claims 1-3, wherein the second carbon-based material has a specific capacity less than that of the first carbon-based material.

5. The secondary battery according to any one of claims 1-4, wherein (002) crystal planes of the second carbon-based material have an interplanar spacing less than or equal to 0.33600 nm, optionally from 0.33571 nm to 0.33600 nm.

6. The secondary battery according to any one of claims 1-5, wherein the second carbon-based material has a specific capacity greater than or equal to 353 mAh/g, optionally from 355 mAh/g to 365 mAh/g.

7. The secondary battery according to any one of claims 1-6, wherein the second carbon-based material has a powder compaction density under 20000N pressure of from 1.75 g/cm³ to 2.05 g/cm³, optionally from 1.78g/cm³ to 2.00g/cm³.

8. The secondary battery according to any one of claims 1-7, wherein the second carbon-based material comprises artificial graphite, and the artificial graphite does not have a carbon coating layer on the surface.

9. The secondary battery according to any one of claims 1-8, wherein the second carbon-based material satisfies at least one of the following conditions:
(1) the second carbon-based material has a volume average particle size Dv10 of 6 µm to 12 µm, optionally from 6.5 µm to 11.5 µm;
(2) the second carbon-based material has a volume average particle size Dv50 of 12.0 µm to 22.0 µm, optionally from 13.5 µm to 20.5 µm;
(3) the second carbon-based material has a particle size distribution (Dv90-Dv10)/Dv50 of ≤1.65, optionally from 0.90 to 1.65;
(4) the second carbon-based material has a tap density of 0.85 g/cm³ to 1.30 g/cm³ optionally from 0.9 g/cm³ to 1.30 g/cm³;
(5) the second carbon-based material has a specific surface area of 1.0 m²/g to 2.9 m²/g, optionally from 1.2 m²/g to 2.5 m²/g.

10. The secondary battery according to any one of claims 1-9, wherein the first carbon-based material comprises more than one pore structure with a pore area greater than or equal to 0.15 µm², optionally more than one pore structure with a pore area of from 0.15 µm² to 2.0 µm².

11. The secondary battery according to any one of claims 1-10, wherein the first carbon-based material comprises an external region and an internal region disposed on the inside of the external region, the external region being a region comprising a distance of 0.25 L extending from the surface of the particles of the first carbon-based material towards the interior of the particles, L being a short-axis length of the particles of the first carbon-based material; total pore area of the external region is denoted as S₁ and total pore area of the internal region is denoted as S₂, and S₂ > S₁, optionally 1.5 ≤ S₂/S₁ ≤ 500, 2 ≤ S₂/S₁ ≤ 450.

12. The secondary battery according to claim 11, wherein
the pore structure in the external region of the first carbon-based material has an area of less than or equal to 0.15 µm², optionally less than or equal to 0.10 µm²; and/or
the pore structure in the internal region of the first carbon-based material comprises more than one pore structure having an area greater than or equal to 0.15 µm², optionally more than one pore structure having an area of from 0.15 µm² to 2.0 µm².

13. The secondary battery according to any one of claims 1-12, wherein the first carbon-based material satisfies at least one of the following conditions:
(1) the first carbon-based material has a specific surface area of 0.7 m²/g to 1.8 m²/g, optionally from 0.8 m²/g to 1.6 m²/g;
(2) the first carbon-based material has a volume average particle size Dv50 of 8.0 µm to 25.0µm, optionally from 10.0 µm to 20.0 µm;
(3) the first carbon-based material has a volume average particle size Dv90 of 16.0 µm to 35.0 µm, optionally from 17.0 µm to 32.0 µm;
(4) the first carbon-based material has a (Dv90-Dv10)/Dv50 of ≤ 1.50, optionally from 0.7 to 1.40;
(5) the first carbon-based material has a powder compaction density under 20000N pressure of 1.75g/cm³ to 1.95g/cm³, optionally from 1.80g/cm³ to 1.90g/cm³;
(6) the first carbon-based material has a tap density of 0.80 g/cm³ to 1.50 g/cm³, optionally from 0.85 g/cm³ to 1.45 g/cm³;
(7) the first carbon-based material has a graphitization degree of ≥ 93.5%, optionally from 93.8% to 98%;
(8) the first carbon-based material has a powder OI value of 8-18, optionally from 8 to 16;
(9) the first carbon-based material has a specific capacity of ≥ 354 mAh/g, optionally from 354 mAh/g to 370 mAh/g;
(10) in the peak-splitting profile of the X-ray diffraction spectrum of the first carbon-based material, there are two diffraction peaks at 2θ of 25.5°-27.5°, among the two diffraction peaks, the one with a smaller 2θ is recorded as a first peak, the one with a larger 2θ is recorded as a second peak, optionally the ratio of the peak intensity of the first peak to that of the second peak is 10:90 - 40:60.

14. The secondary battery according to any one of claims 1-13, wherein the first carbon-based material is present in the first active material in an amount of ≥ 20wt%, optionally from 30wt% to 70wt%

15. The secondary battery according to any one of claims 1-14, wherein the second region comprises a second active material comprising a third carbon-based material; optionally, the third carbon-based material has a carbon coating layer on the surface.

16. The secondary battery according to claim 15, wherein the third carbon-based material comprises graphite having a carbon coating layer on the surface; optionally, the graphite comprises at least one of artificial graphite and natural graphite.

17. The secondary battery according to claim 15 or 16, wherein the third carbon-based material comprises artificial graphite having a carbon coating layer on the surface, and the artificial graphite comprises secondary particles; optionally, the artificial graphite comprises the secondary particles in a quantity proportion of ≥ 50%.

18. The secondary battery according to any one of claims 15-17, wherein
(002) crystal planes of the second carbon-based material have an interplanar spacing smaller than that of (002) crystal planes of the third carbon-based material; and/or
the graphitization degree of the second carbon-based material is greater than that of the third carbon-based material.

19. The secondary battery according to any one of claims 15-18, wherein the specific capacity of the second carbon-based material is greater than that of the third carbon-based material.

20. The secondary battery according to any one of claims 15-19, wherein
the powder compaction density of the second carbon-based material under 20000N pressure is greater than that of the third carbon-based material; and/or
the powder compaction density of the first carbon-based material under 20000N pressure is greater than that of the third carbon-based material.

21. The secondary battery according to any one of claims 15-20, wherein
the volume average particle size Dv50 of the second carbon-based material is larger than that of the third carbon-based material; and/or
the volume average particle size Dv50 of the first carbon-based material is larger than that of the third carbon-based material.

22. The secondary battery according to any one of claims 15-21, wherein the third carbon-based material satisfies at least one of the following conditions:
(1) the volume average particle size Dv50 of the third carbon-based material is from 10.0 µm to 22.0 µm, optionally from 11.5 µm to 20.0 µm;
(2) (Dv90-Dv10)/Dv50 of the third carbon-based material is ≤ 1.65, optionally from 0.90 to 1.65;
(3) the third carbon-based material has a powder OI value of 2.0-6.5, optionally from 2.0 to 6.0;
(4) the third carbon-based material has a powder compaction density under a pressure of 20000 N of from 1.65 g/cm³ to 2.00 g/cm³, optionally from 1.68 g/cm³ to 1.98 g/cm³;
(5) the third carbon-based material has a tap density of 0.85 g/cm³ to 1.25 g/cm³, optionally from 0.90 g/cm³ to 1.25 g/cm³;
(6) the third carbon-based material has a graphitization degree of ≤ 96%, optionally from 90.5% to 95.5%;
(7) the third carbon-based material has a specific surface area of 0.9 m²/g to 2.5 m²/g, optionally from 0.95 m²/g to 2.45 m²/g;
(8) the third carbon-based material has a specific capacity of 340 mAh/g to 360 mAh/g, optionally from 345 mAh/g to360 mAh/g.

23. The secondary battery according to any one of claims 1-22, wherein the first region and/or the second region further comprises a silicon-based material; optionally, both the first region and the second region comprise a silicon-based material, and a mass proportion of the silicon-based material in the first region is less than or equal to that of the silicon-based material in the second region.

24. The secondary battery according to any one of claims 1-23, wherein an intermediate region located between the first region and the second region comprises the first active material and/or the second active material.

25. An electrical device comprising the secondary battery according to any one of claims 1-24.
